# EUROPEAN PATENT APPLICATION

(11) **EP 4 841 515 A1**
(43) Date of publication of application: **18.11.2026**
(21) Application number: 25176898.2
(22) Date of filing: 16.05.2025
(51) Int. Cl.: G06N 3/096, G06N 3/0442

(54) **ZERO-SHOT FORECASTING ACROSS LONG AND SHORT HORIZONS WITH ENHANCED IN-CONTEXT LEARNING**

(71) Applicant: NXAI GmbH, 4020 Linz (AT)
(72) Inventor: The designation of the inventor has not yet been filed
(74) Representative: Best, Bastian

(57) **Abstract**

A method for time series forecasting is described, which involves receiving an input time series, preprocessing it, segmenting it into non-overlapping windows, processing the windows using a neural network with multiple blocks, and applying a masking strategy to train the network. The network maintains state information and supports in-context learning using a recurrent component. During training, future inputs are treated as missing values, and uncertainty is propagated through the network. The method outputs distributional forecasts for future time points.

## Description

### TECHNICAL FIELD

This disclosure relates generally to the field of neural network system architectures for machine learning, and more specifically to time series forecasting.

### BACKGROUND

Time series forecasting is a critical area of data analysis that involves predicting future values based on previously observed values. This field has applications across numerous domains including industrial machine control, healthcare, energy management, cloud computing, medical engineering, manufacturing, and many other areas where temporal data patterns are analyzed to inform decision-making.

Traditional approaches to time series forecasting include statistical methods such as ARIMA (Autoregressive Integrated Moving Average), exponential smoothing, and various regression techniques. These methods have been complemented by machine learning approaches including decision trees, random forests, and more recently, deep learning techniques.

Despite significant advances, time series forecasting faces several persistent challenges. Time series data exhibits tremendous variety across different domains. Data collected from industrial machines, IT infrastructure, or healthcare monitoring systems each possess unique characteristics, including different seasonality patterns, trends, and noise structures. Models trained on one domain often perform poorly when applied to another domain without extensive retraining.

In many practical applications, the available historical data for specific forecasting tasks is limited. This scarcity of training data poses challenges for developing accurate forecasting models, especially for rare events or newly established processes.

Time series models often demonstrate decreasing accuracy as the prediction horizon extends further into the future. Short-term predictions typically benefit from the strong correlations with recent observations, while long-term forecasts require capturing complex patterns and dependencies that may evolve over time.

Point forecasts, which provide a single value for each future time point, fail to capture the inherent uncertainty in time series predictions. This can lead to overconfidence in forecasts and potentially poor decision-making in critical applications.

Many time series models require retraining or fine-tuning when applied to new datasets, even within similar domains. This creates barriers for non-experts who may lack the technical expertise to adapt models to their specific needs.

Processing long sequences of time series data can be computationally demanding. This challenge becomes more pronounced when dealing with high-frequency data or when making predictions that require considering a lengthy historical context.

Real-world time series data often contains missing values or is sampled at irregular intervals, which introduces additional complexity for forecasting models that typically assume regular, complete data.

When forecasting multiple steps into the future, many models suffer from error accumulation, where small inaccuracies in early predictions compound into larger errors in later time steps. This degradation of forecast quality over extended horizons remains an ongoing challenge.

Traditional time series models often struggle to quickly adapt to the specific patterns of individual time series without explicit retraining, limiting their ability to forecast previously unseen data effectively.

There exists a tension between developing models that are complex enough to capture intricate temporal patterns yet simple enough to avoid overfitting and remain computationally efficient for real-world applications.

While probabilistic forecasts can represent uncertainty, they often fail to provide easily interpretable information about the sources and nature of that uncertainty, which is advantageous for decision-makers.

Despite decades of research and the development of increasingly sophisticated methods, these challenges continue to present obstacles in the advancement of time series forecasting. Addressing these issues requires innovative approaches that can balance computational efficiency, forecasting accuracy, uncertainty representation, and generalizability. Challenges remain in developing time series forecasting methods that can address multiple aspects of these problems, particularly in creating models that generalize across domains while maintaining accurate predictions over varied time horizons and providing reliable uncertainty estimates.

It is therefore an objective of the present disclosure to enable more accurate time series forecasting across both short and long horizons without requiring task-specific training, thereby overcoming the drawbacks of the prior art at least in part.

### SUMMARY OF THE DISCLOSURE

The above and other objectives may be achieved by the subject-matter defined in the independent claims. Advantageous modifications of embodiments of the present disclosure are defined in the dependent claims as well as in the description and the drawings.

Various embodiments of this disclosure provide TiRex, a pre-trained time series forecasting model based on xLSTM. To unlock the state-tracking capabilities of xLSTM, various embodiments provide Contiguous Patch Masking, a training-time masking strategy tailored for in-context learning, which enables strong long-term forecasting results. In various embodiments, TiRex establishes a new state-of-the-art in zero-shot forecasting, outperforming prior methods on both short- and long-term horizons across the Chronos-ZS and GiftEval benchmarks. Ablation studies further highlight the individual contributions of each component to overall performance.

One aspect relates to a method for time series forecasting. The method may be computer-implemented.

The method may comprise a step a) of receiving one or more input time series. This may involve gathering data points over a specific time interval applicable to a particular application or scenario.

The method may comprise a step b) of preprocessing the input time series. Accordingly, after receiving the input time series, the method optionally progresses to preprocessing, working on the input time series. This preprocessing stage can enable preparation of the data for further analysis by addressing noise and/or missing data, standardizing values, and/or transforming the time series if applicable. Preprocessing can help ensure that the input data is suitable for the subsequent processing steps.

The method may comprise a step c) of segmenting the (preprocessed) time series into a sequence of windows. This segmentation can facilitate the division of continuous data into discrete chunks, allowing for individual analysis of each segment. The windows may be non-overlapping windows. Non-overlapping windows make each segment distinct and contribute uniquely to the forecasting without interference from adjacent windows.

The method may comprise a step d) of processing the (optionally segmented) sequence of windows and/or the (optionally segmented) input time series using a neural network. The neural network may comprise one or more, preferably multiple, blocks. Each block may include a recurrent component that can maintain state information and that enables in-context learning and/or zero-shot learning. This recurrent component can support maintaining state information across different segments, enabling the neural network to effectively learn patterns over time. This recurrent component can enhance in-context learning, whereby the neural network adapts based on historical patterns and improvements gathered through ongoing contextual updates during training stages.

The method may comprise a step e) of applying, in particular during training of the neural network, a masking strategy. The masking strategy may mask contiguous sequences of windows. The masking strategy can dynamically conceal certain data points within the segmented windows, challenging the neural network and improving its robustness. By implementing masking, the neural network learns to adapt and predict under constrained data conditions, thereby refining its predictive capabilities.

The method may comprise a step f) of, for multi-window forecasting and/or multi-timepoint forecasting, treating future inputs as missing values (optionally while propagating uncertainty through the recurrent component) thereby making the neural network more robust and increasing the in-context learning and zero-shot learning capabilities. Treating future inputs as missing values can bolster the system's capability to navigate uncertainty and ensure that predictions include confidence intervals, thereby illustrating potential variability within forecasted results.

The method may comprise a step g) of outputting at least one forecast, in particular one or more point-wise and/or distributional forecasts, for future time points. These forecasts can provide probabilistic predictions rather than point estimates, offering a more comprehensive depiction of potential outcomes for future data, which is advantageous in scenarios involving risk assessment or decision-making under uncertain future events.

The features explained above outline a structured, iterative approach for time series forecasting, aiming for enhanced accuracy and reliability of predictions by incorporating dynamic learning and uncertainty management in the forecasting process.

In time series forecasting, preprocessing can involve using instance normalization on input data. This technique can normalize each instance individually to handle data variance across time series, ensuring consistency across differing scales. This can aid in scenarios where data points vary due to different contexts or measurement systems.

Instance normalization can adjust data within each instance to a standard distribution, typically by subtracting the mean and dividing by the standard deviation. This can help mitigate issues related to different scales and biases, enabling analysis stages to detect patterns and relationships without scale inconsistencies.

In preprocessing, instance normalization can prepare data for segmentation and neural network processing, enhancing the network's learning capabilities. Normalized data allows the network to identify patterns without dealing with unstandardized data, which might obscure temporal relationships.

It can also support faster convergence and better generalization during neural network training by ensuring data consistency, allowing extraction of meaningful temporal dependencies. Overall, instance normalization in preprocessing can improve accuracy in time series forecasting.

In the context of preprocessing the input time series for forecasting, instance normalization can optionally involve using z-score normalization. Z-score normalization is a statistical approach that standardizes data points within each instance, transforming them into a scale where the mean is zero and the standard deviation is one. This aids in adjusting data across varying scales and units, allowing the neural network to focus on pattern learning without distortions caused by inherent bias or magnitude differences.

The procedure may begin by calculating the mean and standard deviation for the data points within a given instance. Each data point may then be transformed by subtracting the mean and dividing by the standard deviation, converting them into z-scores. These z-scores represent the number of standard deviations away from the mean, providing a standardized scale for each instance.

Utilizing z-score normalization in instance normalization can promote uniformity and comparability across different data segments, especially in diverse time series datasets. This supports accuracy during model training and enhances the neural network's capability to detect and leverage temporal patterns, reducing biases from variable scales and peculiar trends within the raw data.

Therefore, z-score normalization can serve as a useful preprocessing strategy that lays the groundwork for accurate and effective time series forecasting, aiding in high-quality predictions by offering a consistent and unbiased representation of the data for analysis.

Segmenting the preprocessed time series into connectable windows of fixed size represents a method that can contribute to the approach of time series forecasting.

Implementing fixed-size windows in the segmentation process allows each window to encompass a uniform data segment, providing consistent analysis across each segment and supporting usage for neural network processing.

The concept of fixed-size windows may involve selecting a predetermined number of data points within each window, ensuring all windows are connectable with the same length or size. This uniformity can simplify the input format for the neural network, aiding it in learning more efficiently by focusing on consistent patterns within equally distributed data segments. Fixed-size windows may enable the network to utilize standard operations and calculations without requiring adjustments for varying segment lengths, facilitating integration within the neural network architecture.

Using fixed-size windows can aid pattern recognition within each individual window and throughout the entire time series, as it addresses challenges presented by uneven data distributions that might arise from variable-length windows. By maintaining regular intervals and sizes, the method can explore recurring temporal patterns, trends, or cycles in the underlying data.

Moreover, fixed-size windows support streamlined applicability and maintenance of masking strategies during neural network training, contributing to robust learning even when certain portions of data within the windows are concealed from the network to enhance generalization capabilities.

The use of fixed-size non-overlapping windows in this method may result in precise forecast outputs and improved reliability of the predictive model, potentially enhancing the overall practicality and efficiency of the forecasting approach by promoting consistent state representation and analysis across the time series data.

It may be provided that the recurrent component comprises an xLSTM. Within the realm of time series forecasting, working with a recurrent component such as an xLSTM can facilitate enhancements in the neural network's ability to maintain state information while allowing for in-context learning. xLSTM, or Extended Long Short-Term Memory, is an advanced variant of the traditional LSTM network that aims to address challenges in managing long-range dependencies and intricate temporal patterns.

Integrating xLSTM into the neural network potentially enhances capabilities for processing sequential data, with each component capable of maintaining information across varying time steps. Similar to a standard LSTM, the xLSTM can retain and update internal states using gates that manage information flow, preserving significant data points over time while handling noise and less relevant inputs. The extended nature of xLSTM allows for the possibility of incorporating additional features, such as higher-dimensional interactions and improved memory management, to better capture nuanced dependencies within the data.

Employing xLSTM components within the neural network architecture may offer the advantage of adaptive learning, where the network adjusts and refines its understanding of time-based relationships as new input data is encountered through training. This adaptability can provide robust modeling capabilities when dealing with variable input sequences often seen in time series data, potentially improving forecast accuracy and reliability.

The integration of an xLSTM component is adaptable in complex pattern recognition and supports continuity in learning sequences, making it potentially suitable for multi-window forecasting scenarios where future inputs might be considered as missing values. This ability to manage uncertainty and maintain state consistency can enrich predictive competence and enhance the network's capacity to provide distributional forecasts for future time points, enabling comprehensive analysis across diverse forecasting applications.

Incorporating xLSTM as a recurrent component can align with the aim of producing precise, insightful, and actionable predictions from complex time series datasets, possibly promising better management of temporal dynamics and deeper interpretation of sequential data realities.

An exemplary specific implementation named TiRex illustrates the application of xLSTM within a structured framework. The design utilizes xLSTM as its backbone architecture, focusing on a decoder-only mode that can streamline the training process by concentrating solely on decoding tasks, without necessarily requiring an encoder component. This model configuration aims to enhance efficiency in computational resource usage while potentially maintaining robust training performance. Central to the exemplary TiRex implementation is the strategic stacking of multiple xLSTM blocks between minimalist input and output layers. By stacking these xLSTM blocks, the architecture potentially leverages the strengths of the xLSTM in processing sequential data, allowing for more nuanced modeling of temporal dynamics across numerous layers. Each xLSTM block can increase the model's depth, enabling an enriched learning experience where complex temporal dependencies may be recognized and understood with greater fidelity. The lightweight nature of both input and output layers help reduce overhead and complexity, supporting swift data flow and dynamic processing capabilities. These streamlined layers play a role in minimizing latency and optimizing data throughput, which can potentially accelerate the neural network's overall analytical capabilities in forecasting scenarios. Despite the simplified input and output design, the stacked xLSTM blocks may ensure the network remains flexible and effective in absorbing diverse time series inputs. The decoder-only mode introduced within the exemplary TiRex implementation represents a focused refinement in the training workflow. This approach simplifies training by concentrating on the decoding process, allowing the network to identify patterns from input sequences effectively to generate forecasts. This focused training method can potentially enhance the network's ability to understand and predict time-dependent relationships, contributing to its robustness and reliability in predictive tasks. In summary, the exemplary TiRex implementation may represent advancements in neural network architecture through its deployment of xLSTM blocks. This embodiment provides an interpretation of time series forecasting by integrating efficient training strategies and streamlined layer designs, ultimately supporting the pursuit of precise and insightful predictions in effectively managing complex temporal data.

It may be provided that the xLSTM comprises a sLSTM module. The sLSTM module may enable state-tracking capabilities. The sLSTM introduces a modification within the LSTM framework, focusing on dynamically tracking and updating state information throughout sequential data processes.

Incorporating sLSTM modules into the xLSTM framework enables the model to manage and retain pertinent data points over prolonged durations without losing context and precision. This module contributes to maintaining continuous awareness of the internal state, mainly through mechanisms devised to log and distinguish notable state changes from minor data noise. This heightened sensitivity to state variations enhances forecast reliability, especially in multi-window or complex time series scenarios where states naturally progress over successive observations.

The sLSTM module allows the xLSTM recurrent component to adaptively react to incoming data fluctuations and preserve structural patterns, which are suitable for making informed predictions. It can dynamically evaluate and prioritize temporal patterns, employing gates for input transformation while efficiently updating the internal state representation.

These state-tracking capabilities assist the model in maintaining comprehensive oversight concerning sequential dependencies, decreasing errors in forecasting outputs by utilizing a richer historical context. Integrating sLSTM modules within xLSTM recurrent components enhances the neural network's ability to interpret temporally interconnected data, thereby improving the robustness of its forecasts.

Therefore, this approach integrates architectural designs like xLSTM with sLSTM modules to navigate complexity, offering precise and adaptable forecasts for varied time series applications.

The integration of the sLSTM module within the xLSTM framework is illustrated by an exemplary specific implementation that notably accentuates state-tracking features through architectural trade-offs. In this implementation, the memory capacity is strategically adjusted to enable real recurrence, defined by a direct interaction with sequential data processes, optimizing computational efficiency. This adjustment permits the xLSTM block to focus on core recurrence functionality, emphasizing timely and relevant data handling in dynamic forecasting environments. To support the efficiency of the xLSTM block, feed-forward networks are included within the architectural setup. These networks serve an advantageous role in processing sequential data, facilitating rapid and precise transformations of input information. This inclusion amplifies the network's capacity to interpret and reorganize data as it progresses through xLSTM layers, ensuring accuracy and contributing to overall model utility. Additionally, residual skip connections are integrated into the design. These connections are advantageous for efficiency as they allow the xLSTM to bypass certain layers during data processing, preserving prior states and reducing information loss over time. The residual connections ensure continuity and depth within the model's operations, decreasing error propagation and enabling smoother transitions between states. Together, this architectural design promotes a balance between memory capacity and data persistence, resulting in a flexible model adept at navigating complex time series tasks with precision. By supporting robust state-tracking through real recurrence, feed-forward networks, and residual skip connections, the xLSTM block exemplifies a forward-thinking approach in time series forecasting, adept at generating precise predictions suitable for fluctuating temporal patterns and dependencies.

It may be provided that each block further comprises one or more of: a) at least one normalization layer; b) a feed-forward network; and c) at least one residual skip connection.

The integration of normalization layers into each block can support consistent processing across varied data inputs, enhancing stability and aiding convergence during training. Normalization standardizes each block's inputs, reducing discrepancies due to different scales, variances, or biases present in the data. This preparation permits the network to concentrate on detecting intrinsic patterns, bypassing potential noise or distortion from unadjusted inputs.

Feed-forward networks in each block execute linear transformations and apply non-linear activation functions to its inputs, aiding in complex feature extraction and representation. These networks enhance data processing capabilities, boosting the network's ability to digest and interpret segmented windows with precision, aiming for more refined predictions across diverse time series.

Residual skip connections offer a strategic pathway for data to transition smoothly through each block, minimizing information degradation or loss as inputs traverse the network. These connections facilitate direct data flow from one block to another, preserving the integrity of prior state information and accumulated learning without complicating the network architecture. This setup helps mitigate the vanishing gradient issue, which can manifest during deep network training, aiming for clearer and sharper signal propagation.

Overall, these components within each block work towards enhancing the neural network's efficiency and accuracy in forecasting, augmenting its capability to deliver reliable predictions by leveraging enhanced learning dynamics across integrated features. This structural design optimizes each block's contribution to the process, aiming for agility and adaptability within the network's operations for time series analysis, and producing forecasts with heightened precision across varied applications.

In the context of time series forecasting, within each block the normalization layer can optionally include RMSNorm, standing for Root Mean Square Normalization. RMSNorm serves as a technique useful for standardizing inputs in a neural network, aiding in managing variations in scale and bias across data sequences.

RMSNorm handles normalization by utilizing the root mean square of input values instead of the traditional mean. This technique highlights the average magnitude of the elements, creating balance across data points in terms of their absolute values. It is advantageous in noisy or high-dimensional datasets, where standard techniques might not address subtle discrepancies that RMSNorm can handle effectively. By incorporating this method, the input values are adjusted, allowing the network to focus primarily on patterns rather than statistical anomalies or distributional shifts within the data.

Embedding RMSNorm within normalization layers may enhance model performance, promoting efficient convergence and stability while potentially reducing the chance of overfitting. It maintains consistent variability within the network's architecture, facilitating feature extraction and interpretation of time-based data sequences.

Due to its adept handling of the normalization process, RMSNorm may lessen computational intensity and optimize preprocessing by presenting input sequences in a refined form, thereby benefiting subsequent feed-forward networks and maintaining residual skip connections. This supports thorough network function deployment without unnecessary complexity.

Implementing RMSNorm within the normalization layer across each block can lead to improved accuracy and reliability in forecasting outcomes, providing a refined base for analyzing time series data across various applications. It enhances data harmonization, fostering predictions through careful treatment of sequential data inputs within the network model.

It may be provided that the masking strategy comprises Contiguous Patch Masking (CPM). This approach thoughtfully obscures segments of data, concentrating on contiguous patches within the input windows. Through patch masking, portions of sequential data can be masked together, preserving the natural coherence and integrity of the data while encouraging the neural network to learn and adjust under constrained conditions.

Contiguous Patch Masking may introduce structured blind spots within input data, which assist the network in focusing on understanding broader context and dependencies rather than just individual data points or fragments. By grouping contiguous patches, this strategy can enhance the network's resilience and adaptability, creating opportunities to interpret temporal patterns, trends, and cycles even when segments of data remain hidden.

As a result, Contiguous Patch Masking may challenge the network without excessively distorting the logical flow of the data. The gaps created through patching can stimulate the learning process, potentially refining the model's capability to make predictions with uncertain or partially visible inputs.

This masking approach contributes to making the network robust and agile, fostering its potential to maintain or improve performance when data irregularities occur. It may lead to comprehensive and balanced prediction capabilities by building resilience against missing data and facilitating adaptation, thus enhancing the generalization and reliability of outputs through careful application of contiguous patching within the masking strategy.

By envisioning structured training protocols around Contiguous Patch Masking, the time series method can ensure a multifaceted approach, potentially enabling precise forecasts across varied and challenging datasets, reinforcing the core aspects of the predictive network.

In an exemplary specific implementation, Contiguous Patch Masking plays a role in refining the nuances of state tracking within a time series forecasting method. This application underscores the strategic significance of randomly masking full data patches during a phase of pre-training. Such pre-training masked conditions are meaningful in crafting a neural network adept at delivering coherent and precise multi-patch predictions. The concept of Contiguous Patch Masking extends beyond mere data obscuration, becoming an element in strengthening the network's capacity to comprehend, interpret, and predict temporal data states with clarity. By systematically applying this masking approach, full contiguous patches of data are optionally maskable to stimulate robust state tracking mechanisms within the pre-training stage. This method ensures the neural network does not merely react to individual data anomalies but rather cultivates an understanding of the sequences and dependencies intrinsic to the dataset. This embodiment serves as a foundation for expanding the neural network's aptitude in recognizing and predicting multi-patch arrangements with fidelity. It encourages the network to engage in a deeper level of learning, absorbing and processing large-scale data relationships despite the presence of masked sections, thus driving the generation of reliable and coherent predictions across interconnected patches. Incorporating structured, randomly applied contiguous patch masking during pre-training can enhance the network's prowess in managing unpredictable data behaviors and ensure coherent output even when data fragments are not wholly available or visible. It offers a groundwork for refining predictive methodologies, ensuring the network's adaptability and effectiveness in navigating complex data scenarios and delivering accurate outcomes. Therefore, this embodiment may strengthen the network's operational flexibility and resilience while aligning with the overarching goals of the patent application. It contributes to reinforcing the integrity and reliability of the forecasting method in diverse and demanding datasets. The careful orchestration of random masking within patches assures that data pattern recognition and state tracking are fortified, enabling dynamic and comprehensive forecasting capabilities that can adapt to varied temporal landscapes.

It may be provided that the Contiguous Patch Masking comprises one or more of: a) randomly selecting a masking probability; b) randomly selecting an amount of consecutive patches to mask; and c) generating a binary mask according to the selected probability and consecutive patch amount. Accordingly, in the approach to time series forecasting, Contiguous Patch Masking may involve several calculated steps that enhance depth and structure. Firstly, this masking technique can involve randomly selecting a masking probability, which affects the likelihood of certain patches being masked. This randomness may introduce variability, enabling the network to learn to handle diverse scenarios and data gaps.

Secondly, the process may involve randomly selecting an amount of consecutive patches suitable for masking, which determines the extent or size of each masked segment. The duration or number of consecutive patches can be adjusted to reflect realistic missing data scenarios or test conditions. This step could allow the method to approximate real-world situations, where data might be missing in chunks rather than isolated points.

Once these selections are made, a binary mask can be generated according to the chosen probability and amount of consecutive patches. The binary mask acts as a representation of which patches are visible and which are obscured, effectively mapping masked and unmasked areas within the input sequence. This binary mask can guide the neural network in focusing on the spatial configuration of data it should prioritize while encouraging adaptation to navigate around masked portions.

This series of operations within Contiguous Patch Masking provides a structured and adaptable way to prepare the model to handle data deficiencies, facilitating resilience and adaptability in the forecasting model.

This dynamic approach supports the neural network in processing time series data effectively, even when incomplete information is present, potentially leading to reliable and nuanced predictions amid data fragmentation or uncertainty.

It may be provided that the method for time series forecasting involves outputting distributional forecasts by predicting multiple quantile values for each future time point. This approach provides probabilistic insights into future outcomes by offering a spectrum of possible values amid uncertainty, thereby complementing traditional point predictions.

Quantile values are statistical measures representing specific points within a probability distribution of potential outcomes. Predicting these values supports a nuanced understanding of the distributional characteristics anticipated at future time series points, highlighting various likelihood scenarios instead of focusing solely on a singular estimate.

By predicting multiple quantile values, the method supplies descriptive data, illustrating ranges such as lower, median, and upper quantiles. This approach conveys the variability and breadth inherent in future predictions, providing confidence intervals that assist stakeholders in appreciating risk and potential deviations within forecasts.

The capacity to offer quantile predictions can enhance model robustness, characterizing future outcomes and aiding decision-makers with a detailed narrative of potential events. Quantile forecasts are advantageous for practitioners who analyze strategic scenarios or manage resources under uncertainty.

Ultimately, this approach allows the forecasting method to deliver refined, distributional insights capable of fostering informed decisions and prudently addressing variability, ensuring forecasting outcomes are adaptable to real-world complexities and attentive to shifts or anomalies within predictions across various fields of application.

In one exemplary specific implementation the multiple quantile values comprise a plurality of, e.g., nine, equidistant quantile levels from 0.1 to 0.9. This structured approach provides a detailed breakdown of potential outcomes across several quantile levels, offering a broad perspective on the probability distribution for future values. Each quantile level represents a specific percentage of the data within the distribution, yielding insights from lower, through median, to upper levels. By utilizing nine equidistant quantile values, the method encompasses incremental probability steps, facilitating an extensive exploration of possible future outcomes. These quantile levels are advantageous for highlighting trends within the distribution, providing insights such as the likelihood of extreme values or the stability of median outcomes. This granularity aids in understanding the source of variations and supports risk evaluation by presenting a range of potential future values. Implementing quantile forecasting in this manner equips stakeholders with effective predictive tools, fostering nuanced analyses of financial markets, climate patterns, operational logistics, or other areas affected by variability. This approach aims to improve forecasting integrity, resulting in clear, distinguished predictions that adapt to specific needs and remain flexible to changes within time series data. Such an approach promotes forecasts that are balanced and insightful, acknowledging uncertainty and offering adaptability to address complexities inherent in predicting future outcomes.

It may be provided that treating future inputs as missing values comprises representing missing values with a binary mask that is concatenated to the time series values before processing. This approach can be advantageous for depicting absent data points and is compatible with the forecasting workflow.

A binary mask designed for missing values may accompany the original time series values, where it can be concatenated or appended to these values prior to processing. This combination helps the neural network recognize which data points are present and which are absent, assisting in a structured analysis even amid incomplete datasets.

Binary masks often comprise two distinct indicators, with '1' typically indicating existing data points and '0' indicating missing ones. This distinction supports the neural network in adjusting its learning algorithm, prioritizing available data while considering uncertainties related to masked inputs.

The process of concatenating the binary mask employs an encoding strategy that can enhance neural network operations by providing a framework for scenarios in which future inputs may be sporadically available or unobtainable. Consequently, this integration aims to improve predictive reliability through effective management of missing data points.

This method is designed to be adaptable, offering a forecasting framework suited for environments by embedding structural approaches that address gaps and variations. The use of binary masks presents a way to maintain the continuity of predictions across each time series forecast, potentially enhancing the application of predictive models in practical settings.

It may be provided that the method further comprises mapping each window to an input space of the neural network using a two-layer residual block. This architectural component can support efficient data flow from input windows to the network's processing layer, potentially facilitating enhanced connectivity within the network model.

A two-layer residual block typically includes two feed-forward layers with a residual connection that allows input data to bypass layers, offering the possibility of preserving original signal integrity as data flows. It can provide transformation and feature extraction through specifically tuned layers while maintaining original information, potentially enhancing learning depth with minimal degradation of the data.

The introduction of residual blocks may promote effective learning by addressing issues like vanishing gradients and enabling smoother gradient propagation, thereby facilitating clearer pathways for data acquisition and interpretation. These residual connections might improve connectivity within network layers, creating a feedback loop that integrates previous states and enhances convergence.

The inclusion of two-layer residual blocks offers a methodology for mapping windows into neural network input spaces. The blocks may adjust mapping components effectively, forming data channels that can support adaptation to complex data behavior and ultimately encourage improved accuracy and stability in forecasts.

By employing residual blocks within input mapping, the forecasting method aims to refine layer interactions, fostering a more cohesive and stable data processing framework that optimizes the capabilities of sophisticated neural network structures. This refinement might contribute to producing predictions that are responsive to evolving data trends.

One aspect of the present disclosure provides a neural network architecture for time series forecasting. The architecture may comprise a) an input layer configured to receive, and optionally preprocess, one or more input time series into a sequence of non-overlapping windows. Accordingly, the architecture begins with an input layer capable of receiving time series data and preprocessing it into a structured format for analysis. This preprocessing optionally includes segmenting the input series into a sequence of non-overlapping windows. These windows may standardize the input data, presenting a consistently formatted batch for further processing and facilitating focused analysis of temporal patterns.

The neural network architecture may comprise b) one or more, preferably multiple, processing blocks. Each block may comprise one or more of: i) a recurrent component that can maintain state information and that enables in-context and/or zero-shot learning; ii) a feed-forward network component; and iii) at least one normalization layer. Accordingly, once segmented, the data can be connected with multiple processing blocks within the architecture. Each block may include components to optimize learning and informational flow:
1. A recurrent component can maintain state information across evolving time sequences while facilitating in-context learning. This component may dynamically adapt to incoming data, allowing the network to preserve insights from past observations and adjust predictions according to new context.
2. A feed-forward network component within each block can support complex feature extraction, translating input data into meaningful representations through linear transformations and non-linear activation functions. This may enhance the network's capacity to explore intricate patterns within the time series.
3. At least one normalization layer may be included to promote consistency by adjusting varied input scales. This layer can help stabilize the processing environment, reducing distortions and biases that could impede learning.

The neural network architecture may comprise c) connections between the multiple processing blocks configured to propagate both predictive state and uncertainty across multiple forecasting windows. Accordingly, this interconnection may allow data flow to be comprehensive and adaptable, supporting the network's ability to integrate current predictions with uncertainties, enhancing robustness in perceiving potential variations or risks.

The neural network architecture may comprise d) an output layer configured to generate distributional forecasts for future time points. Instead of providing singular deterministic forecasts, this layer can produce probabilistic distributional forecasts, capturing inherent uncertainties and offering a detailed portrayal of possible future outcomes across multiple quantiles.

By implementing this neural network architecture, the patent application may aim to improve accuracy and reliability in time series forecasting, aiding nuanced decision-making based on distributional predictions that account for variability and uncertainty. These capabilities are designed to make the architecture adaptable to diverse forecasting contexts and capable of generating insights with increased precision across dynamic environments.

Within this neural network architecture for time series forecasting, the input layer can optionally be configured to apply instance normalization to the incoming time series data. This preprocessing method can address variations in scale or bias across different instances within the data, promoting more uniform learning conditions.

Instance normalization may involve standardizing each instance individually, potentially adjusting it to have a mean of zero and a standard deviation of one. This approach can encourage consistency by managing diverse data origins or measurement conditions, preparing input data for the subsequent processing steps.

Applying instance normalization at the input stage can reduce the effect of discrepancies and noises that might distort the interpretation of the time series data. It aids in organizing the sequence before segmentation into non-overlapping windows, allowing the neural network to focus on learning temporal patterns with fewer scale inconsistencies.

By preparing the input in this manner, the architecture aims to support clarity and stability during the learning process, targeting more effective identification of intrinsic patterns and relations within time series data. This adjustment may support forecasting with reduced sensitivity to anomalies, enhancing the reliability and precision of prediction outputs.

Instance normalization has the potential to improve data flow, encouraging adaptive responsiveness within the neural network, which may be advantageous for precise analysis and predictions across various time series forecasting scenarios.

In the neural network architecture for time series forecasting, the input layer can be optionally configured to include a two-layer residual block, facilitating the mapping of each window to the input space of the neural network. This structural choice aims to preserve data integrity while optimizing computational flow within the model.

A two-layer residual block may enhance data processing capability by transforming input windows into representations suitable for analysis. These layers can apply activation functions to reshape and extract pertinent features from input data, contributing to meaningful inclusion within the network's operational scope.

Residual blocks offer skip connections that allow certain layers to be bypassable, effectively enabling raw input signals to flow directly through the architecture. This setup supports the possibility of maintaining original information fidelity, particularly useful in scenarios where data transitions smoothly and remains resilient against degradation across layers.

Integrating residual blocks into the input layer may address challenges like vanishing gradients, promoting convergence and stability during training. It can foster connectivity within neural network layers, potentially enhancing learning efficiency and enabling deep neural architectures to integrate prior states and learned patterns effectively.

This two-layer residual block can improve input mapping by refining connectivity and stability, encouraging robust and efficient interaction between the input layer and the neural network's deeper processes. By facilitating focused and reliable data transformation, the residual block can contribute to producing detailed and accurate forecasts, adaptable across diverse time series applications.

In the described neural network architecture for time series forecasting, the recurrent component can be connectable to incorporate an xLSTM with an sLSTM module, potentially enhancing the handling of complex temporal dependencies and state management.

The xLSTM, or Extended Long Short-Term Memory, offers a variation of conventional LSTM networks, which might assist in managing long-range dependencies and intricate data patterns. Its inclusion enables the neural network to maintain information across sequences with improved agility and depth, facilitating complex learning processes and improving adaptability to data fluctuations.

Optionally integrating an sLSTM module within the xLSTM aims to further refine state-tracking capabilities. The sLSTM module can improve the network's ability to dynamically adapt and preserve key state information over extended periods. It might effectively log significant state changes, differentiating notable shifts from extraneous noise, thereby offering continuity and clarity across sequential data.

This configuration within the recurrent component supports retaining a comprehensive historical context while engaging in adaptive learning, with the potential to adjust its internal state and condition predictions based on evolving data patterns. By attending attentively to state representation, the xLSTM with sLSTM can anticipate a detailed narrative of temporal relationships, potentially modeling intricate and recurrent dependencies effectively.

Utilizing the xLSTM alongside the sLSTM equips the neural network with tools for interpreting sequential dynamics, which might improve predictive accuracy and offer adaptable forecasts that account for complexities within multi-window time series scenarios. This approach could support a resilient and insightful strategy for addressing forecasting challenges across various applications.

In the neural network architecture designed for time series prediction, each processing block can be equipped with residual skip connections. These connections are suitable for enclosing both the recurrent components and the feed-forward network components within each block, optimizing data flow and promoting model performance.

Residual skip connections provide pathways that allow certain segments of input data to bypass one or more layers, preserving original information and supporting seamless forwarding through the network. This integration can help reduce information decay-a common challenge in deep neural networks-by promoting smoother transitions and maintaining clarity as data passes through different stages of processing.

By implementing these connections around the recurrent components, the architecture can retain valuable context and state information that is helpful for capturing long-term dependencies and sequential dynamics present in time series data. This arrangement enhances the network's ability to adapt autonomously when processing new input sequences.

Similarly, residual skip connections around the feed-forward network components can support the model's capacity for efficient feature extraction and transformation. These feed-forward networks undergo linear and nonlinear operations, and the presence of residual connections ensures that important signals are preserved alongside deeper learned representations to promote efficient learning and adaptation.

The integration of residual skip connections in each block helps to strengthen architectural robustness by improving gradient flow and training stability, ensuring that the network can converge effectively even as model depth increases.

These supporting integrated residual paths enable the architecture to provide improved connectivity and reliability in prediction processes, increasing the accuracy and responsiveness of forecasts while leveraging detailed state information and dynamic transformations from the input data. This approach promotes robust and valuable solutions for diverse time series prediction applications.

Within the framework of the neural network architecture for time series forecasting, the normalization layer can be suitably configured to optionally include RMSNorm, or Root Mean Square Normalization. This architectural choice in normalization may aid in standardizing data inputs, promoting consistency across varying scales and biases inherent in sequential datasets.

RMSNorm serves as an alternative to traditional normalization techniques by employing the root mean square of input values rather than their arithmetic mean. This approach can emphasize average magnitudes, supporting balanced processed data in terms of absolute value, which could be advantageous in handling noisy or high-dimensional datasets where anomalies may affect results.

Incorporating RMSNorm into the normalization layers across processing blocks can promote stability and facilitate convergence during neural network training. RMSNorm might help reduce disparities across data input sequences, allowing the network to concentrate on detecting temporal patterns without distractions from inconsistent scales or biases.

The use of RMSNorm can also enhance the feed-forward network's operational efficiency within each block, permitting refined operations and interpretations of sequential input data through normalization and adjustment, and supporting residual skip connections for coherent data flow.

This inclusion within the normalization layer aims to improve forecast accuracy by presenting inputs in a form suitable for robust analysis and neural network processing. RMSNorm's adept handling of normalization can contribute to stability and reliability within the architecture, suggesting nuanced and precise time series forecasting across varied applications, effectively managing data intricacies for enhanced predictive outcomes.

In the neural network architecture developed for time series forecasting, the output layer is optionally configured to generate multiple quantile predictions for each anticipated time point, allowing for a probabilistic perspective on forecasted outcomes.

Opting for multiple quantile predictions, the output layer facilitates a distributional approach to future estimates, signifying diverse potential scenarios rather than limiting forecasts to singular values. Quantile predictions can signify the likelihood of future data points occurring within specified intervals of the probability distribution, including low, median, and high quantiles.

Generating multiple quantiles offers beneficial insights concerning variability and uncertainty inherent in future observations. This approach can aid in evaluations of risk and deviation probabilities, equipping decision-makers by depicting potential fluctuations throughout temporal forecasts.

The strategy of quantile forecasting reflects adaptability in model outputs, supportive of navigating uncertainties and risk management challenges across areas such as finance, environmental science, healthcare, or logistics. It promotes distributional analytics, guiding stakeholders with comprehensive data on prospective future outcomes, reinforcing informed decision-making processes amid uncertainty.

This configuration of the output layer aims for enhanced forecast precision and reliability, underpinning predictions with detailed probability distributions and allowing the model to efficiently handle complex temporal relationships. With its robust quantile forecasting capability, the architecture is geared to deliver insightful and versatile predictive analytics.

Within the neural network architecture for forecasting, the output layer may be designed to generate multiple quantile predictions, optionally incorporating nine equidistant quantile levels ranging from 0.1 to 0.9 for each future time point. This structured approach can contribute to a broad view of possible outcomes by delineating a wide spectrum of probabilistic forecasts.

The equidistant quantile levels represent distinct segments within the distribution of potential future values, each indicating a specific probability measure or percentage span of the anticipated outcomes. By utilizing nine quantiles, the architecture may elaborate on the degree of certainty or variance expected across future forecasts, potentially covering lower, median, and upper distribution bounds.

This depiction can provide granularity in evaluation, illustrating potential extremes or variabilities within forecast outputs. Such quantile forecasting may assist in identifying risk measures, assessing confidence intervals, and understanding data distribution breadth and dynamics.

The integration of nine evenly spaced quantile levels can be advantageous for varied applications where appreciating the full range of possible outcomes is valuable-such as financial forecasting, climate modeling, inventory management, or healthcare diagnostics. Through such quantile diversity, stakeholders can employ predictive analytics to navigate complexity and uncertainty effectively.

By offering predictions across nine quantile levels, the output layer aims to enhance the reliability and flexibility of forecast results, providing users with comprehensive insight into the probability landscape of future events and equipping them with tools to make proactive, informed decisions.

In the discussed neural network architecture suited for time series forecasting, the input layer may be configured to optionally concatenate a binary mask with the time series values. This setup makes it possible to represent the presence or absence of data points within the sequence, fostering a structured approach to handling incomplete datasets.

The binary mask can include a straightforward mechanism for marking each data point, typically using binary indicators-where '1' shows a present or valid data entry and '0' suggests an absent or missing value. By concatenating this mask to the original time series values, the neural network gains the ability to differentiate between sections of the input data that are complete and those that could require special processing due to missing values.

Embedding the binary mask within the input layer may support the neural network in applying varied strategies for learning and interpretation, accommodating uncertainties linked with missing data towards robust pattern recognition and predictive analysis. The binary mask may assist in maintaining dataset consistency and establishing distinctions for processing scenarios where future inputs might sporadically be available.

This configuration potentially contributes to increasing the model's adaptability and efficiency in forecasting scenarios by providing a framework for navigating data discontinuities. The inclusion of binary masking can allow the architecture to improve its predictive reliability amid dynamic data variability and offer stakeholders informative insights even in less complete datasets.

Within the neural network architecture designed for time series forecasting, the output layer may optionally incorporate a residual block aimed at potentially transforming output tokens back to the dimensions of an output window. This innovative approach may enable backward mapping of predictions to the original context of the time series data being analyzed.

Residual blocks within the output layer can serve as advantageous elements for refining data transformation and may promote consistency and integrity of output predictions relative to input dimensions. These blocks use residual connections to bypass certain transformation layers, retaining direct pathways for output signals while minimizing distortion or loss of clarity as data progresses through complex processing stages.

The transformation of output tokens back to the dimensions of an output window can be advantageous for producing forecasts that align with the original temporal structure of the data. This task may facilitate a seamless transition from model predictions to practical application, where decision-makers can contextualize insights within the natural sequence and granularity of real-world data scenarios.

By embedding a residual block in this manner, the architecture may foster forecasting precision and maintain fidelity for output tokens, equipping the model with suitable pathways to adapt processed insights to coherent and actionable formats. This functionality may be applied in applications where consistent dimensions for outputs are beneficial, ensuring that predictive analytics yield useful, contextually relevant results.

Ultimately, the inclusion of a residual block in the output layer can facilitate efficient mapping of complex data predictions back to their fundamental formats, contributing to coherent communication of forecasting insights and potentially reinforcing the utility and reliability of the neural network for time series analysis.

In one aspect of the present disclosure, a method for training a time series forecasting neural network is provided. The method may comprise a) receiving a corpus of time series datasets. Accordingly, the present disclosure also includes a method for training a time series forecasting neural network that embraces a structured process designed to potentially enhance the learning capacity and predictive accuracy of the model using curated datasets. Initially, the process involves receiving a corpus of time series datasets, which includes diverse temporal data patterns and sequences that could be suitable for the training regimen.

The method may comprise b) for each training sample: i) optionally preprocessing the time series; ii) optionally segmenting the preprocessed time series into a sequence of non-overlapping windows; iii) applying a contiguous patch masking strategy by randomly masking full and consecutive patches; iv) applying at least one data augmentation technique to enhance model robustness; and/or v) processing the masked and augmented sequence through a neural network with recurrent components. Accordingly, each training sample can undergo systematic preprocessing to prepare the time series data for analysis. This stage involves standardizing input formats and addressing variances, thereby leading to more consistent analytical conditions. The preprocessed sequence is segmented into non-overlapping windows, providing structured input batches that facilitate focused learning by the neural network.

Applying a contiguous patch masking strategy is part of the training method, where complete and sequential patches within the segmented windows are masked randomly. This conditional obscuration gives the neural network exposure to missing data scenarios, refining its ability to detect and interpret hidden patterns more effectively.

The use of data augmentation techniques enhances model robustness, expanding the variability and complexity present within the training data. By augmenting data strategically, the network's adaptability and generalization capabilities across different temporal datasets are improved.

As the neural network processes masked and augmented sequences, recurrent components in its architecture focus on retaining dynamic state information while supporting iterative learning across data sequences. These components maintain continuity throughout training, allowing the network to adapt and evolve in response to diverse inputs.

The method may comprise c) optimizing the neural network parameters by minimizing a quantile loss function. Optimizing neural network parameters involves minimizing a quantile loss function, aligning with the goal of producing probabilistic forecasts. This approach improves precision by adjusting model weights to limit prediction errors based on quantile discrepancies, fostering calibration towards accurate distributional intelligence.

The method may comprise d) storing the trained neural network for subsequent use in time series forecasting. Eventually, the method considers storing the trained neural network for subsequent usage in time series forecasting, ensuring its availability for predictive analysis and application across varied scenarios.

This comprehensive approach incorporates strategic data manipulation and advanced neural network processing, aiming to develop forecasting models that are robust, accurate, and responsive to complex temporal dynamics, conducive to generating reliable and insightful predictions adaptable to real-world applications.

In the context of training a time series forecasting neural network, preprocessing the time series can optionally encompass applying z-score normalization. This technique serves as a supportive step aimed at standardizing the dataset to foster consistency and uniformity across different instances, which is beneficial for effective learning and analysis.

Z-score normalization transforms each data point by subtracting the mean and dividing by the standard deviation of the dataset. This process adjusts the scale of the data such that it aims for a mean of zero and a standard deviation of one across the sequence. It can help mitigate the impact of outliers and stabilize variances, allowing the neural network to focus on inherent patterns and relationships without being overly influenced by unadjusted biases or magnitude differences.

By applying z-score normalization during preprocessing, the method prepares the time series data for subsequent stages, assisting in ensuring that the input presented to the neural network is consistent and appropriately scaled. This normalization strategy offers a level playing field for data segments and facilitates reliable detection of temporal trends as the network progresses through training.

This procedural step may enhance convergence speed and model performance by promoting harmonized inputs, enabling the neural network to process and extract meaningful insights from the dataset more efficiently. It serves as a supportive aspect of the training method, contributing to improved accuracy and robustness in the resultant forecasting model, offering consistent interpretation and predictions across diverse temporal applications.

In the method for training a time series forecasting neural network, the contiguous patch masking strategy may include several steps designed to refine the model's responsiveness to scenarios with missing data. This strategy seeks to expose the neural network to varied data conditions, potentially enhancing its adaptability and robustness during training.

The process might begin by randomly sampling a number of consecutive patches to mask, drawn from a uniform distribution. This sampling can introduce variability in the size and extent of the masked sections within the data, effectively simulating realistic situations where data might be absent in contiguous segments rather than individual points.

Next, a masking probability can be randomly sampled from a uniform distribution to determine the chance that particular patches will be masked. This step may further boost the randomized nature of the training conditions, allowing the neural network to encounter diverse patterns of data availability and engage in learning even when certain data subsets are obscured.

Finally, the method generates a binary mask according to the sampled probability and consecutive patch count. The binary mask can identify which patches in the sequence are visible and which are concealed, guiding the neural network in adapting its processes to these conditions. This mask facilitates strategic data manipulation, potentially encouraging the model to sustain accuracy despite incomplete information.

By integrating this contiguous patch masking strategy, the training method may prepare the neural network to handle uncertainties and disruptions in data access with increased resiliency. The strategy could contribute to developing a forecasting model capable of managing real-world data complexities and producing reliable predictions, even amid data fragmentation or absence.

In the training method for a time series forecasting neural network, applying data augmentation techniques serves as a beneficial step in enhancing the model's robustness and adaptability. It involves introducing controlled variability into the data, which facilitates a deeper learning process and prepares the network to handle diverse real-world scenarios.

One augmentation technique may include amplitude modulation, which involves altering the amplitude of the time series data. This approach can simulate scenarios of increased or decreased signal strength, offering the network practice in interpreting data with fluctuating intensities. Amplitude modulation can assist the model in learning to focus on underlying patterns rather than being swayed by scale variations.

Another technique may encompass censor augmentation, where segments of the time series data are selectively censored or obscured. This approach offers a training environment where data points are intermittently retained or removed, simulating real-world data disruptions. Censor augmentation encourages the network to adjust its predictions and interpretations when certain data points are absent or unavailable.

Spike injection might be yet another augmentation technique, where sudden, anomalous spikes are introduced into the sequence. These spikes might represent potential real-time anomalies or outliers within data that the network might encounter. By learning to manage these spikes, the model aims to accurately delineate between normal patterns and deviations, potentially improving its reliability in practice.

The utilization of these augmentation strategies diversifies the data feeding into the model, contributing to a robust training process. Such techniques enable the neural network to extrapolate meaningful insights across varied conditions, yielding predictions with improved accuracy and relevance, which can be advantageous for many temporal datasets where data variability is inherent.

In an exemplary specific implementation, a well-rounded approach to augmenting time series data through innovative techniques is presented, aimed at enhancing the robustness and adaptability of neural network models used for forecasting. This embodiment may focus on three potential augmentation techniques: Amplitude Modulation, Censor Augmentation, and Spike Injection, each strategically devised to diversify the data patterns encountered by the model during training. Firstly, Amplitude Modulation is considered for its ability to simulate various scenarios of signal intensity fluctuation within time series data. By systematically altering the amplitude, this technique generates a controlled variation in data scale, thereby challenging the neural network to effectively discern and adapt to underlying patterns regardless of signal strength fluctuations. This modulation trains the model to focus on intrinsic relationships within the data, fostering resilience against potential misinterpretations caused by mere amplitude changes. Censor Augmentation introduces another layer by selectively censoring segments of the time series data. This technique resembles introducing intentional data loss or disruption, which is common in real-world scenarios where data collection may be sporadic or incomplete. A network exposed to censor augmentation learns to interpolate or extrapolate missing information, thereby improving its capability to maintain reliable predictions amidst gaps and interruptions in data streams. Such exposure primes the model to handle the unpredictability and variability inherent in real-time data applications. The third technique, Spike Injection, involves the intentional introduction of anomalous spikes into the data sequence. These spikes may represent real-world anomalies or outliers that a neural network might observe, such as sudden economic shifts or unexpected sensor errors. By frequently encountering these spikes during training, the model develops a heightened ability to distinguish between typical patterns and those indicative of actual deviations. This training may bolster the model's anomaly detection capabilities, ultimately supporting improved accuracy and reliability in predictions. Together, these augmentation strategies contribute to creating a comprehensive training environment where the model is equipped to tackle diverse data conditions. This systematic diversification of training data, indicative of many real-world scenarios, ensures the neural network gains proficiency in extracting and extrapolating insights across varied and potentially volatile temporal datasets. The enhanced predictive precision achieved through these techniques reflects their advantageous utility in broad applications where data variability and unpredictability are prominent, further suggesting their role in fortifying the model's robustness and adaptability as described in this exemplary specific implementation.

In the framework of time series forecasting, amplitude modulation can optionally extend to introducing trends and changepoints in the scale of the time series during the training phase of a neural network. This nuanced approach to modulation aims to enrich the dataset with dynamic variations, improving the learning experience for the model as it encounters diverse conditions and patterns.

Trends in amplitude modulation may encompass systematic increases or decreases in the scale across the dataset over a period, reflecting potential real-world scenarios where the intensity of signals or values can evolve under the influence of underlying factors. These trends encourage the neural network to adapt to gradual shifts in data and identify underlying drivers or patterns that are responsive to temporal changes.

Changepoints through amplitude modulation might signify abrupt modifications in scale, representing sudden shifts in data levels, intensity, or dynamics. These could occur due to unforeseen events, shifts in environmental conditions, or changes in underlying processes. By strategically introducing changepoints, the neural network gains practice in identifying and adjusting to these sudden shifts, aligning its predictive approach with the expected behaviors and responses reflective of broader temporal influences.

Incorporating trends and changepoints via amplitude modulation during training helps the neural network develop resilience and flexibility, fostering its ability to interpret and predict sequences across varied temporal landscapes. It encourages nuanced understanding of data variations, resulting in forecasting capabilities that account for both gradual evolutions and abrupt transitions in temporal dynamics-qualities that are particularly useful for navigating complex, real-world data scenarios effectively.

Overall, amplitude modulation enriched with trends and changepoints offers a comprehensive training strategy that broadens the scope of learning experiences for the neural network, aiming for more adaptable and insightful forecasting outputs.

It may be provided that censor augmentation comprises censoring values within the time series at a random threshold sampled from the empirical distribution of the time series. The approach involves censoring values within the time series based on a random threshold sampled from the empirical distribution of the data. By doing so, structured variability is introduced, simulating real-world data disruptions and intermittencies within the training process.

Sampling a random threshold from the empirical distribution involves deriving censoring criteria from the observed statistical characteristics of the dataset. The technique aligns the censoring threshold with the distributional properties of the time series, reflecting scenarios where certain data points are omitted, thus indicating possible gaps influenced by unusual observations or external constraints.

Censoring values at these thresholds leads to strategic omissions within the data sequence, enabling the neural network to navigate and predict patterns amid absent data. This exposure encourages the network to infer or extrapolate missing details, enhancing its resilience and capabilities in managing incomplete datasets.

Using thresholds informed by empirical data contributes to maintaining relevance and contextual integrity, even as parts of the sequence are deliberately obscured. This technique may improve the network's adaptability during variable conditions, enhancing its predictive reliability and accuracy by training under dynamic conditions typical of real-time scenarios.

By promoting learning through sampling thresholds from the empirical distribution, the neural network possibly gains a better understanding of data complexities, resulting in improved predictive insight suited to various temporal applications.

It may be provided thath spike injection comprises adding short, periodic spike signals to the time series. This augmentation technique can introduce deliberate anomalies and outlier patterns within the sequence, providing the neural network with opportunities to practice distinguishing between regular data behaviors and those indicative of unexpected events or anomalies.

Short, periodic spikes can emulate real-world occurrences where sudden, transient deviations might affect data sets. Such deviations may stem from operational disruptions, external influences, or brief shifts in underlying processes. By encountering these spikes, the neural network can identify irregular patterns and adjust its predictions accordingly.

Injecting these spikes periodically allows recurrent exposure to anomalies, which may improve the model's ability to account for and respond to unusual signals within data streams. This has the potential to enhance the network's robustness in processing real-world data that often contains unpredictable events.

This structured exposure to spike signals might boost the neural network's anomaly detection capabilities, contributing to resilience and accuracy in predictions amid data variability. Spike injection aids in preparing the model to handle ongoing dynamic data realities effectively, supporting its competence across diverse forecasting scenarios.

It may be provided that the spike signals are defined by a kernel selected from a tophat kernel, radial basis function kernel, and linear kernel. These kernels can potentially influence the shape and characteristics of the spike signals introduced within the time series, offering varied structured anomaly patterns during training.

A tophat kernel represents a simplistic kernel that produces flat-topped spikes with sharp edges, effectively generating abrupt transitions that emulate sudden changes or high-intensity events within the dataset. This kernel can support the neural network in recognizing and adjusting to immediate signal variations.

The radial basis function (RBF) kernel forms spikes with smooth, bell-shaped patterns that decline gradually from a central peak. It can be utilized for modeling smooth, temporary shifts, potentially reflecting cyclic influences or gradual deviations. Using the RBF kernel might aid the network in understanding and differentiating between subtle and significant changes across time series data.

A linear kernel generates spikes defined linearly, which can represent consistent increases or decreases within a period. This straightforward representation may assist in modeling prolonged shifts, helping the neural network to identify and respond to linear trends or disruptions.

Incorporating these kernels in spike injection allows the neural network to encounter diverse anomaly profiles during training. Exposing the model to various kernels may enhance its responsiveness to real-world data complexities and stochastic events, potentially leading to improved anomaly detection and predictive precision across numerous applications.

In the described method for training a time series forecasting neural network, each data augmentation technique is optionally implemented with a predetermined probability. This probabilistic element may guide the frequency and application of each augmentation strategy, allowing for variability and complexity within the training environment.

Predetermined probabilities can make it feasible to systematically incorporate the augmentation process into the method while providing a degree of randomness that might enhance the representation of real-world conditions. By including probabilities for the application of amplitude modulation, censor augmentation, spike injection, or other techniques, the training regimen can retain suitable levels of augmentation without overwhelming the dataset or altering its inherent characteristics.

This approach provides practitioners the opportunity to adjust the intensity and frequency of augmentation according to specific training goals or model preferences. Predetermined probabilities strive to sustain a balance between data diversity and accuracy, thus potentially enhancing training workflows.

Integrating augmentation techniques with strategically defined probabilities might refine the network's adaptability and broaden its interpretative capabilities across various data scenarios. This probabilistic application is intended to improve predictive performance, assisting the neural network in developing resilience and capturing the stochastic nature of certain real-world forecasting challenges. Through optional, controlled augmentation, the network can be better prepared to handle data variability and complexity across a wide array of temporal datasets, thereby supporting its precision and efficacy in forecasting tasks.

In this approach to training a time series forecasting neural network, minimizing a quantile loss function can optionally involve calculating the quantile loss for each output token and averaging the calculated losses across the outputs, with attention to the handling of missing values in output windows. The quantile loss function plays a vital role in training by aligning model adjustments with statistical measures aimed at improving forecast accuracy through probabilistic assessments.

The quantile loss can be calculated individually for each token within the output window, reflecting the difference between predicted and actual values at specified quantile levels. This individualized calculation provides precise error measurement relative to the expected distribution boundaries, allowing a focus on specific quantiles that offer probabilistic insights into forecasted outcomes.

When averaging these losses to refine neural network parameters, the method can highlight relevant data points while optionally overlooking missing values within the output windows. Not considering these absent values might help prevent distortions in loss calculations, as missing data could skew error measurements and inhibit accurate model refinement.

By concentrating on present data points and excluding missing values in output windows, the training regimen can ensure optimization processes are effective and targeted. This approach supports improved quantitative assessments, aligning the network's predictive abilities with probabilistic expectations while promoting resilient and adaptive modeling.

This technique enhances the network's ability to generate insightful distributional forecasts, improving its precision and reliability while accommodating potential data inconsistencies across varied time series applications. It suggests a nuanced error management strategy which facilitates better decision-making through informed probabilistic forecasts.

In the outlined method for training a time series forecasting neural network, optimizing the neural network parameters may include specific training aimed at predicting multiple quantile levels for each future time point. This multifaceted approach to prediction can broaden the network outputs beyond singular deterministic forecasts, offering probabilistic insights into possible future scenarios.

During the optimization stage, the neural network may be crafted to predict a range of quantile levels, which are associated with varying probabilities across the distribution of forecast values. By optionally providing predictions at multiple quantile levels, the network reveals a diverse landscape of potential outcomes at each future point, possibly encompassing lower and upper bound forecasts alongside median insights.

Training to predict these diverse quantile levels can promote a comprehensive view of data variability, allowing stakeholders to perceive potential risks, confidence intervals, and distribution-specific trends. This probabilistic perspective might enhance the network's utility in applications where understanding variance and mapping scenarios can be advantageous for making robust and strategic decisions.

An optional component during training is the use of quantile loss functions, which may guide parameter adjustments towards minimized discrepancies between predicted distributions and observables. Optimizing in this manner can foster precision within the network's capabilities, equipping it to interpret probabilistic data effectively and potentially deliver forecasts that align with nuanced temporal realities.

Overall, this approach to optimizing neural network parameters may involve equipping the network with predictive precision across diverse quantile levels, aligning itself with principles of distributional forecasting suitable for varied real-world temporal applications, and enhancing adaptability and reliability in prediction outputs.

Another aspect of the present disclosure relates to a data processing system, apparatus or device. The data processing system, apparatus or device may comprise means for carrying out any combination of steps of the described methods. The data processing system, apparatus or device may comprise a memory and a processor. The memory may store, or be configured to store, instructions that, when executed by the processor, configure the data processing system, apparatus or device to carry out any combination of steps of the described methods.

Another aspect of the present disclosure relates to a computer program. Another aspect of the present disclosure relates to a non-transitory computer-readable medium having stored thereon a computer program. In both cases, the computer program may comprise instructions which, when the program is executed by a computer, such as the mentioned data processing system, apparatus or device, cause the computer to carry out any combination of steps of the described methods. A computer program may also be referred to as a program, software, a software application, an app, a module, a software module, a script, or code. A computer program may be written in a programming language, including compiled or interpreted languages. A computer program may be deployed in any form, including as a stand-alone product or as a module, component, subroutine, or other unit suitable for use in a computing environment, such as on the mentioned data processing system, apparatus or device.

The terms used herein should generally be construed as understood by the average person skilled in the art, unless explicitly indicated otherwise. The following explanations may guide the understanding:
As used herein, and unless otherwise specified, the phrase "time series forecasting" refers to a process or method for predicting future values of a sequence of data points recorded over time. This clarification can replace the phrase in the claims by indicating that the objective is to estimate one or more future time points using historical data samples. An example of specific embodiments includes forecasting or estimating real-time sensor signals in industrial monitoring.

As used herein, and unless otherwise specified, the term "input time series" refers to any series of temporal data points provided as an input to a model or method. This clarification can replace the term in the claims by denoting the set of time-ordered measurements or observations fed into the forecasting pipeline. Examples of specific embodiments include a univariate signal of daily temperature readings and a multivariate sequence of financial market indicators.

As used herein, and unless otherwise specified, the phrase "preprocessing the input time series" refers to any transformation or cleaning step that prepares raw time series data for subsequent analysis or modeling. This clarification can replace the phrase in the claims by specifying the operations performed on raw data prior to segmentation or model processing. Examples of specific embodiments include filtering outliers, normalizing values, removing seasonal trends, or filling missing data points.

As used herein, and unless otherwise specified, the term "segmenting the preprocessed time series into a sequence of non-overlapping windows" refers to dividing the time series into consecutive, contiguous chunks of data, each chunk covering a distinct range of time without overlap with adjacent segments. This clarification can replace the term in the claims by indicating that each window is formed from a consecutive subset of samples. Examples of specific embodiments include forming windows of 24 hours each from hourly data.

As used herein, and unless otherwise specified, the term "non-overlapping window" refers to a contiguous sub-interval of the time series, such that no data point is shared across two or more windows. This clarification can replace the term in the claims by specifying that each window covers a unique slice of the data. Examples of specific embodiments include fixed-length segments of 7 days each for daily data or variable-length segments that capture consistent event intervals without repetition.

As used herein, and unless otherwise specified, the phrase "fixed size" when used to describe a non-overlapping window refers to a constant number of time steps or data points in each window. This clarification can replace the phrase in the claims by denoting that all windows contain exactly the same number of data values. Examples of specific embodiments include 24-sample windows for hourly data over a day, or 60-sample windows for minute-level data over an hour.

As used herein, and unless otherwise specified, the term "neural network comprising multiple blocks" refers to a connection of computational layers grouped into distinct subdivisions (blocks), each block performing transformations on input data and passing intermediate outputs to subsequent blocks. This clarification can replace the term in the claims by specifying that the network includes a stack of modules, each potentially containing subcomponents such as recurrent layers or feed-forward layers. Examples of specific embodiments include an architecture composed of multiple LSTM-based blocks or transformer-based blocks.

As used herein, and unless otherwise specified, the term "recurrent component" refers to a neural network layer or module capable of maintaining hidden states across time steps, thereby capturing temporal dependencies in sequential data. This clarification can replace the term in the claims by indicating that the module uses a feedback or recurrence mechanism to preserve information from previous time points. Examples of specific embodiments include standard LSTM blocks, gated recurrent units (GRUs), or specialized variations like xLSTM.

As used herein, and unless otherwise specified, the phrase "in-context learning" refers to the capability of a model or component to adapt its representations or predictions based on contextual information within the same sequence, without requiring retraining or parameter updates. This clarification can replace the phrase in the claims by specifying that the component adjusts outputs for the latter part of a sequence by leveraging patterns and states deduced from earlier segments. Examples of specific embodiments include adjusting the forecasting behavior within the same sequence of non-overlapping windows based on observed trends or anomalies.

As used herein, and unless otherwise specified, the term "masking strategy" refers to a procedure that selectively hides or zeroes out data segments or tokens to induce learning of robust representations in a neural network. This clarification can replace the term in the claims by indicating that the network is trained to infer missing values during training. Examples of specific embodiments include Contiguous Patch Masking (CPM), random token masking, or block masking of entire segments.

As used herein, and unless otherwise specified, the phrase "contiguous sequences of windows" refers to groups of adjacent, uninterrupted windows within the time series data. This clarification can replace the phrase in the claims by specifying that the windows are consecutive in time without gaps. Examples of specific embodiments include a series of daily or weekly windows that are placed back to back and used for training or inference without overlap.

As used herein, and unless otherwise specified, the phrase "treating future inputs as missing values" refers to a technique in which the model is informed that samples corresponding to future time points are unknown or masked. This clarification can replace the phrase in the claims by indicating that subsequent inputs are replaced with a placeholder (e.g., a special token or mask) to signify that the values are not known at the time of prediction. Examples of specific embodiments include replacing future data with zeros combined with a binary indicator or skipping them outright during certain computations.

As used herein, and unless otherwise specified, the phrase "propagating uncertainty" refers to the process of carrying forward or updating the model's confidence or distributional parameters across multiple time steps or windows during forecasting. This clarification can replace the phrase in the claims by indicating that any measure of confidence, such as forecast variance or quantile spread, is continually updated as the model processes the time series. Examples of specific embodiments include updating hidden states in a recurrent model with variance estimates or continuing to adjust quantile ranges as new inputs are read.

As used herein, and unless otherwise specified, the phrase "outputting distributional forecasts" refers to generating predictions in terms of probability distributions or sets of quantiles rather than point estimates. This clarification can replace the phrase in the claims by specifying that the model provides a forecast distribution like multiple quantiles or a parametric distribution. Examples of specific embodiments include outputting nine quantile values evenly spaced between the 0.1 and 0.9 levels or returning parameters of a Gaussian mixture model.

As used herein, and unless otherwise specified, the phrase "multi-window forecasting" refers to predicting multiple future windows at once, where each window might correspond to subsequent time periods beyond the current observed data. This clarification can replace the phrase in the claims by indicating that forecasts are generated for multiple future segments, each treated as a continuation of the time series. Examples of specific embodiments include forecasting the next week of data in daily windows followed by the subsequent week in daily windows.

As used herein, and unless otherwise specified, the term "instance normalization" refers to a normalization procedure applied to each time series instance independently, typically subtracting the instance mean and dividing by the instance standard deviation (or applying alternative normalization statistics) on a per-sample basis. This clarification can replace the term in the claims by specifying that the data for each instance (i.e., each time series) is zero-meaned and unit-scaled individually. Examples of specific embodiments include normalizing temperature readings on a per-sensor basis.

As used herein, and unless otherwise specified, the term "z-score normalization" refers to subtracting the mean and dividing by the standard deviation of a given dataset or instance, resulting in transformed values with a mean of zero and a standard deviation of one. This clarification can replace the term in the claims by specifying that each data point is scaled as (x - µ)/σ. Examples of specific embodiments include normalizing each daily stock price by its own historical mean and standard deviation or standardizing sensor readings in an industrial process.

As used herein, and unless otherwise specified, the term "normalization layer" refers to an operation within a neural network block that rescales and shifts data (for example, layer normalization, instance normalization, or RMSNorm) to stabilize or standardize activations. This clarification can replace the term in the claims by indicating that the layer adjusts incoming data to a standardized range or distribution. Examples of specific embodiments include applying RMSNorm to each hidden state or using layer normalization to normalize each token's embedding.

As used herein, and unless otherwise specified, the phrase "feed-forward network" refers to a network component composed of one or more fully connected (dense) layers possibly with nonlinear activation functions, which processes inputs in a single pass (no recurrence). This clarification can replace the phrase in the claims by specifying that it transforms each vector without maintaining an internal hidden state across time steps. Examples of specific embodiments include a multi-layer perceptron with ReLU activations or a single dense layer for dimensionality expansion and compression.

As used herein, and unless otherwise specified, the phrase "residual skip connection" refers to a direct pathway that bypasses one or more layers in a block to enable the original input to be added or concatenated to the block's output, improving gradient flow. This clarification can replace the phrase in the claims by specifying that the input to a layer is summed with or appended to the output of that layer. Examples of specific embodiments include the skip connections used in ResNet architectures or the connections used in transformer blocks to preserve base signal information.

As used herein, and unless otherwise specified, the phrase "residual skip connections around both the recurrent component and the feed-forward network component" refers to placing direct connections that allow information to bypass each of these subcomponents within a block. This clarification can replace that phrase in the claims by indicating that separate residual paths are introduced around the recurrent subsection and around the feed-forward subsection to preserve untransformed signals. Examples of specific embodiments include a block structure where an LSTM sub-layer and a dense sub-layer each have their own additive skip path.

As used herein, and unless otherwise specified, the term "RMSNorm" refers to Root Mean Square Layer Normalization, a normalization technique that divides each vector by its root mean square magnitude and optionally applies a learned scaling factor. This clarification can replace the term in the claims by indicating that the input vector is normalized according to its L2 norm, rather than channel-wise or instance-wise means and variances. Examples of specific embodiments include RMSNorm used in transformer-based networks or in modified LSTM architectures to stabilize training.

As used herein, and unless otherwise specified, the phrase "Contiguous Patch Masking (CPM)" refers to a technique of hiding consecutive segments of input data during training to force the model to learn robust predictions for missing time intervals. This clarification can replace the phrase in the claims by indicating that entire blocks of data points are replaced or zeroed out. Examples of specific embodiments include masking 10 consecutive hours of a daily time series or masking entire daily windows in a weekly dataset.

As used herein, and unless otherwise specified, the phrase "randomly selecting a masking probability" refers to sampling a likelihood or fraction that determines how often a certain segment will be masked out. This clarification can replace the phrase in the claims by indicating that a random value from a uniform or other distribution is chosen, representing the probability with which each segment is masked. Examples of specific embodiments include drawing a value from a uniform distribution over [0, 1] or using a beta distribution parameterized by shape constants.

As used herein, and unless otherwise specified, the phrase "randomly selecting an amount of consecutive patches to mask" refers to stochastically choosing how many contiguous windows (or patches) in a row will be obscured in the time series. This clarification can replace the phrase in the claims by specifying that the procedure samples a positive integer or integer range from a random distribution to define the size of each masked block. Examples of specific embodiments include selecting anywhere from 1 to 5 consecutive daily segments in an hourly data setting or picking up to 3 weekly windows for seasonal data.

As used herein, and unless otherwise specified, the phrase "generating a binary mask according to the selected probability and consecutive patch amount" refers to creating an indicator array (mask) where entries are set to 1 (masked) or 0 (unmasked) based on the chosen probability and length of the contiguous masked segments. This clarification can replace the phrase in the claims by specifying that the mask is constructed to obscure exactly the sampled contiguous patches. Examples of specific embodiments include generating a mask of length 100 with randomly selected runs of 10 consecutive ones, or building an array that randomly places masked blocks in a time series of size 500.

As used herein, and unless otherwise specified, the phrase "predicting multiple quantile values for each future time point" refers to generating different conditional quantiles (e.g., 0.1, 0.5, 0.9) of the future distribution to capture uncertainty at each predicted timestep. This clarification can replace the phrase in the claims by indicating that the forecast comprises an array of values, each corresponding to a different probability level. Examples of specific embodiments include returning three quantiles (lower, median, upper) or producing nine evenly spaced quantiles from 0.1 to 0.9.

As used herein, and unless otherwise specified, the phrase "nine equidistant quantile levels from 0.1 to 0.9" refers to a set of forecast quantiles defined at evenly spaced intervals between the 10% and 90% probability levels. This clarification can replace the phrase in the claims by indicating that the quantiles are placed at 0.1, 0.2, ..., 0.9. Examples of specific embodiments include directly training the model to predict these nine values or using post-processing to compute them from a parametric distribution estimate.

As used herein, and unless otherwise specified, the phrase "representing missing values with a binary mask that is concatenated to the time series values" refers to an encoding scheme where an additional input channel (mask) indicates which elements are known or unknown, appended to the original data at each time step. This clarification can replace the phrase in the claims by declaring that the input dimension increases by one to hold the binary indicator. Examples of specific embodiments include appending 0 or 1 for each data point to denote whether it is valid or missing or constructing a 2D array where each row has [value, mask].

As used herein, and unless otherwise specified, the phrase "output window" refers to the subgroup of time steps or data points corresponding to future predictions returned by the model, typically after the model has observed one or more input windows. This clarification can replace the phrase in the claims by indicating that this is the forecasted range of data points. Examples of specific embodiments include a single hour forecast horizon or multiple daily windows predicted in multi-step forecasting.

As used herein, and unless otherwise specified, the phrase "a two-layer residual block" refers to a feed-forward subnetwork composed of two consecutive layers with a skip connection that bypasses these layers, allowing the original input to be added to or merged with the final output of the two-layer stack. This clarification can replace the phrase in the claims by indicating that each layer may contain linear transformations and activation functions, with the final output added to the initial input. Examples of specific embodiments include a pair of fully connected layers with ReLU activation, or a convolutional module with two convolution layers and a skip connection.

As used herein, and unless otherwise specified, the phrase "mapping each window to an input space of the neural network using a two-layer residual block" refers to transforming raw or preprocessed window data by passing it through a two-layer network with a skip connection, to produce embedding vectors or feature maps used by subsequent neural components. This clarification can replace the phrase in the claims by specifying that each non-overlapping window is fed into the residual block, generating an encoded representation. Examples of specific embodiments include flattening each window's data, applying two dense layers with ReLU activation, and adding a direct skip path to preserve original signals.

As used herein, and unless otherwise specified, the phrase "corpus of time series datasets" refers to a collection or database of multiple individual time series examples used for training, which can span diverse domains or scenarios. This clarification can replace the phrase in the claims by specifying that the training data is drawn from different yet possibly related sources. Examples of specific embodiments include hundreds of financial time series from various stocks, sensor readings from multiple industrial machines, or climate records from numerous meteorological stations.

As used herein, and unless otherwise specified, the phrase "applying a contiguous patch masking strategy by randomly masking full and consecutive patches" refers to randomly selecting and concealing whole consecutive segments within the time series to train the model to infer missing or unobserved periods. This clarification can replace the phrase in the claims by indicating that the training approach involves systematically removing blocks of data points to simulate partial observations. Examples of specific embodiments include blocking out consecutive daily windows in a weekly dataset or zeroing out entire monthly segments in a multi-year time series corpus.

As used herein, and unless otherwise specified, the phrase "applying at least one data augmentation technique" refers to performing transformations or perturbations on the time series data to increase variety in training samples and improve model generalization. This clarification can replace the phrase in the claims by specifying that one or more artificial modifications are introduced without changing the fundamental structure of the data. Examples of specific embodiments include amplitude modulation, censoring random segments, injecting synthetic spikes, or adding random noise to the signal.

As used herein, and unless otherwise specified, the term "amplitude modulation" refers to scaling or shifting the amplitude of a time series in a way that introduces trends or changepoints in the intensity or magnitude of the data. This clarification can replace the term in the claims by indicating that the data is multiplied by time-varying factors or shifted by random offsets. Examples of specific embodiments include introducing random scale factors that increase or decrease the data values over time or abrupt step changes in scale at random points.

As used herein, and unless otherwise specified, the phrase "censor augmentation" refers to setting values in the time series to a constant or threshold-limited level, simulating partial or incomplete observations. This clarification can replace the phrase in the claims by indicating that certain data points are replaced with a fixed threshold or borderline cutoff, such as the top k% of values. Examples of specific embodiments include censoring everything above a random percentile extracted from the dataset's empirical distribution, or truncating sensor readings beyond a certain amplitude.

As used herein, and unless otherwise specified, the term "spike injection" refers to adding short, localized bursts or peaks to the time series, typically following a specific shaped kernel. This clarification can replace the term in the claims by indicating that artificial pulses are added to replicate real-time anomalies. Examples of specific embodiments include injecting Gaussian-shaped spikes using an RBF kernel, imposing rectangular pulses via a tophat kernel, or linear triangular pulses in certain intervals.

As used herein, and unless otherwise specified, the phrase "short, periodic spike signals" refers to repetitive bursts of elevated magnitude inserted at intervals along the time series. This clarification can replace the phrase in the claims by indicating that discrete pulses occur regularly to mimic cyclical anomalies or recurring events. Examples of specific embodiments include spikes repeating every 10 time steps to resemble faulty sensor calibrations, or repeated triangular pulses to simulate seasonal demand peaks.

As used herein, and unless otherwise specified, the phrase "a kernel selected from a tophat kernel, radial basis function kernel, and linear kernel" refers to the shape or profile used to generate spike signals or weighting functions within the data augmentation process. This clarification can replace the phrase in the claims by specifying that the chosen kernel defines the amplitude pattern around the spike's center. Examples of specific embodiments include using a binary step function kernel for abrupt jumps (tophat), a Gaussian-based kernel for smoother spikes (RBF), or a triangular ramp for linear transitions (linear kernel).

As used herein, and unless otherwise specified, the phrase "each data augmentation technique is applied with a predetermined probability" refers to the approach wherein each possible augmentation is triggered according to a specified likelihood or chance. This clarification can replace the phrase in the claims by indicating that a random draw decides for each augmentation whether it will be used or skipped. Examples of specific embodiments include a 30% chance of amplitude modulation, a 20% chance of censor augmentation, and a 10% chance of spike injection in any given sample.

As used herein, and unless otherwise specified, the phrase "minimizing a quantile loss function" refers to optimizing parameters of the model such that a quantile-specific error measure (like the pinball loss) across all predicted quantiles is reduced. This clarification can replace the phrase in the claims by specifying that a quantile-based objective is computed between predicted quantiles and the actual future values. Examples of specific embodiments include computing the average pinball loss for quantiles 0.1 to 0.9, or weighting certain quantiles more heavily if desired.

As used herein, and unless otherwise specified, the phrase "calculating the quantile loss for each output token and averaging the losses, while ignoring missing values in output windows" refers to a procedure in which the loss is summed or averaged over time steps that have valid ground truth data, excluding those intentionally masked or lacking targets. This clarification can replace the phrase in the claims by specifying that partial sequences without actual labels are skipped in the loss calculation. Examples of specific embodiments include discarding future windows for which ground truth is truly unknown in real-world data, or ignoring windows that have been masked for training.

As used herein, and unless otherwise specified, the phrase "optimizing the neural network parameters comprises training the neural network to predict multiple quantile levels for each future time point" refers to the process of parameter update in which the model adjusts to correctly output a set of quantiles at every step in the forecast horizon. This clarification can replace the phrase in the claims by indicating that training includes learning parameters for multiple distributional boundaries. Examples of specific embodiments include learning weights tuned for 0.1, 0.2, ..., 0.9 quantiles or focusing on high percentile predictions for extreme events.

The term "Artificial intelligence" (AI) may be understood as referring to a branch of computer science that aims to develop machines or software capable of intelligent behavior, typically with the goal to mirror or surpass human intelligence in specific tasks. AI systems are designed to perform complex tasks such as reasoning, learning, perception, problem-solving, and understanding natural language. These systems can typically adapt to new situations and improve their performance over time. The goal of AI is to create systems that can function autonomously and interact with their environment in a human-like manner. The term "Artificial neural network" ANN), or "neural network" (NN) in short, may be understood as a machine-learning or deep-learning model or algorithm. Neural networks are generally inspired by the human brain and typically comprise interconnected nodes or neurons organized into layers. Neural networks can be used to process data and learn from examples, enabling them to perform tasks such as image recognition, natural language processing, and more. A neural network typically comprises an input layer, one or more hidden layers, and an output layer. Through a process called training, neural networks can learn to perform specific tasks by adjusting their internal parameters, or "weights", based on labeled or unlabeled data.

The term "natural language processing" (NLP) should be understood as referring to a field of computer science and artificial intelligence that focuses on enabling computers to understand, interpret, and/or manipulate human language. It typically combines computational linguistics with statistical, machine learning, and deep-learning models to process human language in the form of text or voice data, allowing computers to comprehend the intent and sentiment of the speaker or writer. NLP usually involves tasks such as text and speech processing, natural language understanding, text analytics, and it has various applications, including machine translation, speech recognition, and chatbots for customer service, to name just a few.

The term "Industrial process" may be understood as a systematic series of mechanical, physical, chemical and/or electrical operations employed in the manufacturing of goods. These processes are essential for transforming raw materials into finished products on a large scale, often involving complex sequences that enhance efficiency and productivity in various industries.

The term "Machine learning" (ML) may be understood as a subset of artificial intelligence that focuses on the development of algorithms and statistical models that enable computers to perform specific tasks without using explicit instructions. Instead, machine-learning systems learn and make predictions or decisions based on data. Machine-learning algorithms build a mathematical model based on sample data, known as training data, to make predictions or decisions without being explicitly programmed to perform the task. Machine learning can be employed in a variety of applications, including image and speech recognition, medical diagnosis, predictive analytics, and many more, where it enables systems to learn from and adapt to new data independently.

The term "Machine-learning algorithm" may be understood as a computational procedure that is designed to analyze data, learn from it, and identify patterns or make decisions based on the input data without being explicitly programmed for the task. Machine-learning algorithms leverage statistical techniques to enable systems to improve their performance on a specific task with more data over time. Machine-learning algorithms are the foundation upon which machine-learning models are built, providing the methods or processes through which data is transformed into actionable insight. Examples of machine-learning algorithms include linear regression, decision trees, support vector machines, and neural networks, among others.

The term "Machine-learning model" may be understood as referring to the output generated when a machine-learning algorithm is trained on a dataset. It represents the knowledge or understanding gained by the algorithm from the data, encapsulating the learned patterns or predictions. Essentially, a machine-learning model is what enables predictions or decisions based on new, unseen data, based on the learning it has derived from the training process. The machine-learning model is typically defined by its parameters, which may be adjusted during the training phase to minimize the difference between the predicted outcome and the actual outcome. Although, strictly speaking, "machine-learning algorithm" and "machine-learning model" have distinct definitions, it is not uncommon for these terms to be used interchangeably in casual discourse. This usage stems from the close relationship between algorithms and models in the workflow of machine-learning projects, where the algorithm is the means of creating the model. Therefore, these terms may be used synonymously herein unless the distinction is decisive.

The term "Transformer model" may be understood as a type of neural network model that is distinguished by its exclusive reliance on attention mechanisms, eschewing recurrent layers to process sequential data. At the core of the Transformer is the self-attention mechanism, which enables each position in the sequence to attend to all positions in the previous layer of the model simultaneously. This global perspective is said to allow the model to learn context and relationships between words or elements in the input sequence, regardless of their positional distance from each other. The Transformer model typically comprises an encoder and a decoder. The encoder processes the input sequence and transforms it into a continuous representation that holds all the learned information of that sequence. Each encoder layer typically has two sub-layers: a multi-head self-attention mechanism and a position-wise fully connected feed-forward network. The decoder generates the output sequence based on the encoder's representation and the previously generated elements. Each decoder layer typically has three sub-layers: a multi-head self-attention mechanism, a multi-head attention mechanism over the encoder's output, and a position-wise fully connected feed-forward network.

The term "autoregressive neural network" (ARNN) should be understood as a type of artificial neural network designed to predict future values in a sequence based on past values. This predictive capability is achieved through the use of autoregressive modeling, where the network iteratively estimates current data points using previous ones. In an ARNN, input features at each time step are derived from previous time steps, allowing the network to capture temporal dependencies and patterns within the data. The architecture typically includes layers of neurons arranged in a feedforward manner, with weights optimized through backpropagation to minimize prediction errors. ARNNs are widely used in time series forecasting, natural language processing, and other domains where sequential data is prevalent.

The term "recurrent neural network" (RNN) should be understood as a type of artificial neural network that is designed to work with sequential data or time series data. It is typically characterized by its ability to retain a memory of previous inputs and is often used in natural language processing, speech recognition, and other tasks that involve sequential patterns. RNNs are typically capable of processing input of any length, and the model size does not increase with the size of the input.

The term "gated neural network" should be understood as a type of neural network which incorporates one or more gating mechanisms to control the flow of information. These mechanisms may allow the network to regulate the information that passes through the layers of the network, effectively enabling it to learn complex patterns and dependencies in the data. Gated neural networks are particularly useful in tasks that involve sequential data, such as natural language processing (NLP) and time series analysis. In a gated neural network, a gate is typically implemented using an activation function or gating function, for example using sigmoidal functions or other types of activation functions that can output values between 0 and 1. These values are used to scale the activation passing through the network, effectively acting as switches that can either block or allow information to pass.

The term "long short-term memory" (LSTM) should be understood as disclosed in Hochreiter, Sepp & Schmidhuber, Jürgen. (1997). Long Short-term Memory. Neural computation. 9. 1735-80*,* the content of which is incorporated herein by reference. An LSTM may be understood as a type of RNN used in the field of deep learning. It is designed to overcome the limitations of traditional RNNs in learning and remembering long-term dependencies in sequential data. LSTMs are particularly well-suited for tasks such as speech recognition, language translation, and time series prediction due to their ability to retain and utilize information over extended periods. The architecture of an LSTM typically includes memory blocks that can maintain and update information over time, making them effective for modeling sequential data. An LSTM typically comprises or consists of three gates that regulate the flow of information: the forget gate, the input gate, and the output gate. These gates are responsible for controlling the retention and flow of information within the network. The forget gate decides what information to discard from the cell state, the input gate determines what new information to store in the cell state, and the output gate regulates the information that will be output to the next layer of the network.

The term "extended long short-term memory" (xLSTM) should be understood as disclosed in Beck, M., Pöppel, K., Spanring, M., Auer, A., Prudnikova, O., Kopp, M., Klambauer, G., Brandstetter, J., and Hochreiter, S. xLSTM: Extended Long Short-Term memory, 2024. arXiv:2405.04517 as well as in European patent application no. 24155883.2 titled "EXTENDED LONG SHORT-TERM MEMORY NEURAL NETWORKS" and European patent application no. 24174530.6 titled "EXTENDED LONG SHORT-TERM MEMORY NEURAL NETWORKS", the contents of which are incorporated herein by reference. For example, an xLSTM may be understood as an LSTM which is enhanced by exponential gating and, optionally, with appropriate normalization and/or stabilization techniques. An xLSTM may provide a modified memory structure as compared to the classic LSTM: (i) sLSTM with a scalar memory, a scalar update, and/or new memory mixing, (ii) mLSTM that is fully parallelizable with a matrix memory and/or a covariance update rule. These LSTM extensions may be integrated into residual block backbones, which provides xLSTM blocks which can be stacked in residual xLSTM architectures.

The term "large language model" (LLM) or "language model" should be understood as referring to a type of machine-learning model that has been trained to recognize, generate, translate, and/or summarize vast quantities of written human language and textual data. LLMs are notable for their ability to achieve general-purpose language generation. LLMs comprise a large number of parameters, typically in the millions or often billions of parameters, which enable them to capture a wide array of linguistic nuances, patterns, and contexts.

Particular and preferred aspects of the present disclosure are set out in the accompanying independent and dependent claims. Features from the dependent claims may be combined with features of the independent claims and with features of other dependent claims as appropriate and not merely as explicitly set out in the claims.

The above and other characteristics, features and advantages of the present disclosure will become apparent from the following detailed description, taken in conjunction with the accompanying drawings, which illustrate, by way of example, the principles of the disclosure. This description is given for the sake of example only, without limiting the scope of the disclosure.

### BRIEF DESCRIPTION OF THE DRAWINGS

The present disclosure may be better understood by reference to the following drawings:
FIG. 1 illustrates an architecture overview of TiRex in accordance with one embodiment.
FIG. 2 illustrates Contiguous Patch Masking and different training augmentations in accordance with one embodiment.
FIG. 3 illustrates an algorithm for amplitude modulation in accordance with one embodiment.
FIG. 4 illustrates an algorithm for censor modulation in accordance with one embodiment.
FIG. 5 illustrates an algorithm for spike injection modulation in accordance with one embodiment.
FIG. 6 illustrates a method for time series forecasting in accordance with one embodiment.
FIG. 7 illustrates a method for training a time series forecasting neural network in accordance with one embodiment.
FIG. 8 illustrates a schematic block diagram of computer hardware on which embodiments of the present disclosure can be implemented.
FIG. 9 illustrates results of the GiftEval-ZS benchmark. The aggregated scores of the overall benchmark, as well as the short- and long-term subresults, are presented. Additionally, the average rank in terms of CRPS, as in the public leaderboard, is shown. Lower values are better. "Zero-shot with contamination" refers to models which are partly trained on the benchmark datasets (Overlap:: Moirai x%, TimesFM y%). We trained TiRex with 6 different seeds and observed a standard deviation of 0.002 and 0.004 in terms of overall score for CRPS and MASE respectively.
FIG. 10 illustrates results of the Chronos-ZS benchmark. The aggregated MASE and WQL scores, and the average rank in terms of WQL is shown. Lower values are better. "Zero-shot with contamination" refers to models which are partly trained on the benchmark datasets (Overlap:: Moirai 82%, TimesFM 15%).
FIG. 11 illustrates inference efficiency of the best performing pre-trained models. Left: GPU Memory depending on the batch size. Right: Inference Time per sample depending on the batch size.
FIG. 12 illustrates forecasts on two time series from the GiftEval benchmark. For each example, we show one plot with the full context and the TiRex prediction, as well as zoomed-in forecasts of the best-performing zero-shot models. Left: Only TiRex is capable of predicting the periodic short spikes. Right: TiRex predicts a meaningful uncertainty estimate (quantile range) over the long forecast horizon, while TimesFM and Chronos Bolt struggle because of collapsing quantiles.
FIG. 13 illustrates an ablation study of individual components. The top two rows report the mean and standard deviation of TiRex over six runs with different random seeds. For the ablation variants, results that degrade performance by more than 3°ø the standard deviation relative to TiRex are underlined. Columns correspond to evaluation settings: GiftEval-ZS benchmark (overall, short-term, and longterm) and Chronos-ZS benchmark. Lower values indicate better performance.

### DETAILED DESCRIPTION

In the following, representative embodiments illustrated in the accompanying drawings will be explained. It should be understood that the illustrated embodiments and the following descriptions refer to examples which are not intended to limit the embodiments to one preferred embodiment.

### Overview

In-context learning - the ability of large language models to perform tasks using only examples provided in the prompt - has recently been adapted for time series forecasting. This paradigm enables zero-shot prediction, where past values serve as context for forecasting future values, making powerful forecasting tools accessible to non-experts and increasing the performance when training data is scarce.

However, most existing approaches rely on transformer architectures which, despite their success in language, often fall short of expectations in time series forecasting, where models like LSTMs remain competitive. Conversely, while LSTMs are well-suited for time series modeling due to their state-tracking capabilities, they lack strong in-context learning abilities.

Certain embodiments of this disclosure introduce "TiRex" that closes this gap by leveraging xLSTM, an enhanced LSTM with competitive in-context learning skills. Unlike transformers, state-space models, or parallelizable RNNs like RWKV, TiRex retains state-tracking - a critical property for long-horizon forecasting. To facilitate its state tracking ability, certain embodiments propose a training-time masking strategy called CPM. In some of the figures, the term "xLS-Time" is used as a synonym to TiRex.

TiRex sets a new state-of-the-art in zero-shot time series forecasting on the Hugging Face benchmark datasets GiftEval and Chronos-ZS, outperforming significantly larger models including TabPFN (Prior Labs), Chronos Bolt (Amazon), TimesFM (Google), and Moirai (Salesforce), across both short- and long-term horizons.

### Introduction

Recent research in time series forecasting has adopted in-context learning through large-scale pre-trained models, analogous to large language models. These models enable zero-shot forecasting, allowing them to generalize to unseen datasets without parameter updates - akin to meta-learning. This capability empowers practitioners without machine learning expertise to leverage advanced forecasting tools. More importantly, zero-shot forecasting significantly improves performance in data-scarce settings, where training task-specific models often fails to generalize. As a result, in-context learning models hold promise for broad adoption across domains such as energy, retail, and healthcare.

Most pre-trained time series models are based on transformer architectures, which are well-suited for in-context learning, but despite their success in language, often fall short of expectations in time series forecasting. In contrast, LSTMs have demonstrated strong results in time series forecasting due to their recurrence and effective state tracking, yet they lack strong in-context learning capabilities. To bridge this divide, certain embodiments of this disclosure adopt xLSTM, a modern LSTM variant that incorporates architectural enhancements for scalability and improved generalization. Notably, xLSTM has demonstrated in-context learning performance comparable to that of large language models.

To fully unlock xLSTM's state-tracking abilities, certain embodiments introduce Contiguous Patch Masking, a novel training-time masking strategy. This approach enhances xLSTM's ability to produce coherent long-horizon predictions by mitigating degradation common in autoregressive multi-step forecasting.

While synthetic datasets are frequently used for pre-training, the potential of data augmentation strategies remains largely untapped, unlike their established role in vision pre-training . To address this, certain embodiments design and utilize a suite of augmentations.

In summary, certain embodiments of this disclosure may combine one or more of the following aspects:
- TiRex: A pre-trained time series model based on xLSTM, which sets a new state-of-the-art in zero-shot forecasting. It achieves superior performance across standardized benchmarks, improving both short- and long-term forecasting accuracy on multiple datasets.
- Contiguous Patch Masking (CPM): A novel masking strategy that enhances state tracking abilities, therefore enables pre-trained time series models to produce reliable uncertainty estimates over long prediction horizons, effectively addressing autoregressive error accumulation.
- Data Augmentation Strategies: Three augmentation techniques for time series pre-training are presented and their effectiveness in enhancing the robustness and overall performance of TiRex is demonstrated.

Time series forecasting aims to predict future values of a time series based on its past values. Given a time series (*y*₁,*y*₂,...,*y*_{T}) with ${y}_{t} ∈ ℝ$ denoting the value at time *t,* the forecasting objective is to predict its future horizon (*y*_{*T*+1},...,*y_{T+h}*), where *h* is the forecast horizon. Throughout this disclosure, we adopt NumPy-style array notation and denote a contiguous sequence of values, such as a time series, by ${y}_{1 : T} : = {\left({y}_{t}\right)}_{t = 1}^{T} =$ (*y*₁,*y*₂,...,*y_{T}*). Probabilistic forecasting extends this setup by modeling the uncertainty inherent in most time series data. Instead of producing point estimates, the model learns to approximate the conditional distribution over future outcomes. Formally, the goal is to estimate $P \left({y}_{T + 1 : T + h}\left|{y}_{1 : T}\right.\right)$ (1)

In the zero-shot forecasting setting, the prediction model is pre-trained on a corpus of time series datasets *C =* {*D*₁,*D*₂,...*,D_{N}*}*.* At inference the model is applied directly to time series of new, unseen dataset, i.e., y ∈ *D*^{test} and y ∉∪ *C*, without any fine-tuning or task-specific supervision.

### Use Cases

The following application scenarios illustrate how the techniques described herein can be embedded in diverse technical infrastructures, from transport networks and renewable-energy assets to semiconductor tools and robotic cells, where their ability to interpret heterogeneous sensor streams and make horizon-adaptive predictions confers concrete advantages in efficiency, safety and reliability:
**Control system for controlling a technical system or process:** The input data may comprise sensor data captured from the technical system or process. The input data may comprise real-time operational parameters, sensor readings, and/or environmental conditions related to the technical system or process. This could encompass a wide range of systems such as manufacturing assembly lines, chemical processing plants, HVAC (heating, ventilation, and air conditioning) systems in buildings, or even autonomous robotic systems, e.g., in logistics and warehousing. The output data may comprise control signals, adjustments to operational parameters, and/or recommendations for optimizing performance and/or efficiency. This system processes complex datasets to dynamically control and/or optimize the operation of technical systems or processes, addressing technical challenges such as maintaining optimal operating conditions, reducing energy consumption, and/or ensuring product quality or system performance. The technicality arises, at least in part, from the need to interpret diverse and complex data streams and/or to make real-time decisions that directly impact the efficiency, safety, and/or reliability of the controlled system or process. Examples of such systems or processes include, without limitation, optimizing the operation of a renewable energy plant to maximize output while accounting for variable weather conditions, controlling the environmental conditions within a greenhouse to maximize crop yield, or dynamically adjusting the parameters of a water treatment facility to ensure the quality of treated water while optimizing energy use.

**Autonomous vehicle navigation system:** The input data may comprise sensor data captured from the vehicle's surroundings, such as LiDAR data, radar signals, camera images, and/or GPS data. The output data may comprise control signals for steering, acceleration, and/or braking, navigation paths and/or real-time adjustments to the vehicle's route. This system processes complex sensor data to make informed decisions in real-time, a technical challenge involving sophisticated algorithms for perception, decision-making, and motor control. The technicality arises, at least in part, from the integration and real-time processing of diverse data types to navigate safely and efficiently in a dynamic environment, necessitating high computational efficiency and robust decision-making capabilities.

**Predictive maintenance tool for industrial machinery:** The input data may comprise sensor data captured from various sensors attached to machinery, such as temperature sensors, vibration sensors, and/or acoustic sensors, indicating the operational state and/or health of the machinery. The output data may comprise predictive maintenance alerts, recommendations for maintenance actions, and/or prognostics regarding the expected lifespan of machine components. This system processes sensor data to predict machinery failures before they occur, employing machine learning and data analytics techniques. One technical challenge lies in accurately modeling machinery behavior and detecting signs of impending failure, which is a technical problem in the field of predictive maintenance.

**Energy management system for smart grids:** The input data may comprise real-time and historical consumption data from smart meters, weather forecasts, energy prices, and/or the status of renewable energy sources. The output data may comprise optimization strategies for energy distribution, demand response recommendations, and/or predictions for energy consumption. This system addresses the technical complexities of managing and optimizing energy flows within a smart grid, involving the technical problem of balancing supply and demand in real-time.

**Adaptive traffic-signal network control:** The disclosed forecasting and control engine ingests heterogeneous traffic-sensor streams-loop-detector counts, radar-derived queue lengths, bus-priority flags and short-horizon flow forecasts-and, in real time, computes phase splits, inter-green times and corridor offsets for every junction on the field-bus. By minimising queue spill-back and stop-and-go cycles, the system tangibly lowers fuel consumption and particulate emissions while increasing network throughput, thus constituting a concrete improvement to an urban traffic-control installation.

**Predictive ramp-rate control in utility-scale wind farms:** Continuous SCADA data, nacelle-mounted LiDAR wind previews and grid-dispatch constraints are fused to generate per-turbine pitch-angle and yaw-alignment commands plus a farm-level power set-point. The result is a real-time smoothing of active-power output, mitigation of structural loads and extension of component lifetime-an optimisation directly within the technical operation of a wind-energy conversion process.

**Cloud data-centre resource auto-scaling:** CPU-utilisation traces, memory-pressure counters, request-per-second metrics and dynamic electricity prices are analysed to issue VM placement or migration commands, set dynamic voltage-and-frequency scaling levels and schedule activation of cold-standby servers. The controller reduces latency violations and curtails energy draw per computation, thereby improving a computer system itself in line with established EPO case law.

**High-frequency load forecasting and dispatch in EV fast-charging hubs:** Per-charger telemetry, transformer-loading data, fleet-arrival predictions, weather feeds and spot-market prices are processed each second to assign charger power levels, orchestrate battery-buffer charge or discharge and place price-responsive bids to the DSO. This mitigates transformer overload, shaves demand peaks and maximises renewable self-consumption, delivering a technical advance in the management of an electrical energy subsystem.

**Lithography-chamber process-window control in semiconductor fabs:** Optical-dose metrology, resist-thickness data, chamber environment traces and vibration signatures are modelled to derive feed-forward adjustments for exposure dose, focus and post-exposure-bake temperature on the next wafer lot. Tightening the critical-dimension distribution in real time reduces scrap and widens the usable process window, enhancing the technical performance of a semiconductor manufacturing apparatus.

**Rolling-stock-mounted track-condition monitoring:** Bogie acceleration vectors, axle-box vibration spectra, GPS speed profiles and ambient temperature readings are evaluated on-board to produce track-degradation scores, trigger maintenance work orders and issue conditional speed restrictions to the signalling centre. Early detection of rail corrugation and sleeper voids prevents derailments and lengthens rail life, representing a safety-critical improvement in railway infrastructure maintenance.

**Grid-scale battery-energy-storage health management:** Pack-level voltage, current, impedance growth and cell-temperature gradients, together with ambient climate data, inform optimal charge/discharge C-rates, thermal-management set-points and cell-balancing schedules. The system suppresses thermal-runaway risk and retains usable capacity for longer, thus technically enhancing the reliability and longevity of large electro-chemical storage installations.

**Hydroponic greenhouse climate and fertigation control:** Dissolved-oxygen, pH and electrical-conductivity probes, leaf-surface temperature imaging, CO₂ levels and external weather forecasts are jointly analysed to set nutrient-solution flow-rates, adjust supplemental lighting and modulate vent-window positions. This maximises photosynthetic efficiency and water-use productivity while minimising energy input, providing a technical optimisation of controlled-environment agriculture.

**Real-time anomaly detection and speed override for collaborative robots:** Joint-torque residuals, camera-based human-pose estimations, ambient sound spectra and production-schedule context are interpreted to impose instantaneous velocity or force limits, re-plan paths and emit proxemic warnings. The arrangement prevents unintended human-robot collisions without halting production, offering a safety-critical enhancement of an industrial robot control system.

**Adaptive video-bit-rate selection in mobile streaming:** Second-by-second throughput predictions, radio-link quality indicators, device buffer occupancy and user-mobility forecasts are processed to decide segment-level bit-rate selections and pre-fetch schedules delivered to the CDN. This reduces stall events and over-the-air retransmissions, yielding more efficient utilisation of the radio channel and thus improving a digital communication system.

### TiRex

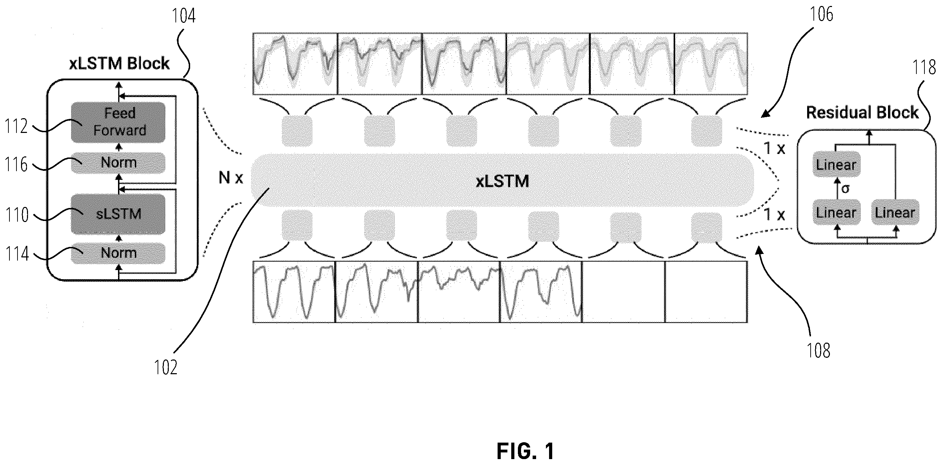

FIG. 1 illustrates an architecture overview of an embodiment which will be referred to as "TiRex" in this disclosure. The figure shows the two main building blocks and illustrates a forecast. The context of the forecasted series is shown in the sampling lines in the lower part, while the forecast of TiRex is shown in the sampling lines in the upper part. In inference, only the last three output windows are of interest.

In the illustrated embodiment, TiRex utilizes xLSTM 102 as its backbone architecture, and adopts a decoder-only mode, which allows for efficient training. It stacks multiple xLSTM blocks 104 between a lightweight input layer 106 and output layer 108. The input layer 106 preprocesses the time series via scaling and patching operations, producing tokens that are subsequently processed by the xLSTM blocks 104. The output tokens correspond to forecasted patches of the target series and are mapped back to the forecast horizon. For multi-patch forecasting, additional inputs are encoded as missing values. The individual components will be described in detail in the following.

**xLSTM Block:** The TiRex embodiment shown in FIG. 1 adopts the block design proposed by xLSTM, but substitutes the mLSTM with an sLSTM module as the sequence mixing component. sLSTM allows for state-tracking, trading it for reduced memory capacity. Each xLSTM block 104 comprises a sLSTM module 110 followed by feed-forward network 112, with both components preceded by an RMSNorm 114, 116. Additionally, both the sLSTM module 110 and feed-forward network 112 include residual skip connections. sLSTM supports real recurrence, which enables state-tracking, yet still is efficient in training and inference due to an optimized kernel architecture.

In certain embodiments, TiRex stacks multiple of these xLSTM blocks 104, depending on the model size. After the last block, an additional RMSNorm may be applied.

**Input/Output Layer and Loss:** In certain embodiments, as a pre-trained time series model, TiRex is designed to generalize across diverse time series domains, which often exhibit significant variation in scale. To ensure robustness, TiRex may apply instance normalization to each time series. Specifically, z-score normalization is used in certain embodiments: ${{y}^{˜}}_{0 : T} = \frac{{y}_{0 : T} - {\overline{y}}_{0 : T}}{{σy}_{0 : T}}$, where, y̅ and *σ*_{y} denote the mean and standard deviation of the time series sample.

In certain embodiment, TiRex segments time series into non-overlapping windows, and maps each window to the input space of the xLSTM 102 using a two-layer residual block 118. This patching mechanism, inspired by vision transformers and adapted for time series, reduces the effective sequence length of the xLSTM blocks 104 by a factor defined by the window size. To account for missing values, a binary mask indicating presence or absence is concatenated to the time series values before the residual block 118. Given an input window of size *m*ᵢₙ and xLSTM hidden dimension d, the patching block defines a mapping ${ℝ}^{2 {m}_{in}} \to {ℝ}^{d}$. In certain embodiments, the same residual block 118 is shared across all time windows.

Mirroring the input layer 106, the decoder's output tokens are transformed back to the dimensions of the output-patch window using a residual block 118 and subsequently scaled back to the original target space. Hereby, the model outputs provides |*Q*| quantile values for each time step of the output-patch window, rather than single-point predictions. Hence, the output block defines a mapping ${ℝ}^{d} \to {ℝ}^{{m}_{out} \times \left|Q\right|}$.

Specifically, certain embodiments of TiRex predict nine equidistant quantile levels, *Q* = {0.1, 0.2,..., 0.9}. The model's parameters can be optimized by minimizing the quantile loss. In certain embodiments, the loss is calculated for each output token, therefore, the loss does not distinguish context and forecast for a training sample, but implicitly "forecast after each input token". Formally, the loss for an output window, given the true value *yₜ* at time *t* and its corresponding quantile predictions ${\hat{y}}_{t}^{q}$ for quantile level *q* ican be computed as: $L = \frac{1}{\left|Q\right| ∗ {m}_{out}} {\sum }_{t = 1}^{{m}_{out}} {\sum }_{q ∈ Q} \left\{\begin{matrix}q \left({y}_{t}-{\hat{y}}_{t}^{q}\right) & if {\hat{y}}_{t}^{q} \leq {y}_{t} \\ \left(1-q\right) \left({\hat{y}}_{t}^{q}-{y}_{t}\right) & else .\end{matrix}\right.$ (2)

In certain embodiments, the losses of all output tokens of a training sample are averaged - missing values in the output window are ignored for the loss calculation.

**Multi-Patch Horizion Forecasts:** In certain embodiments, when the forecast horizon *h* exceeds the output patch length, multiple future patches must be predicted. We refer to this as multi-patch prediction. Existing pre-trained models typically address this via autoregressive generation, using point estimates (mean or median) of previous outputs as inputs for subsequent patches. However, this approach reinitializes the probabilistic forecast at each step, disrupting the propagation of uncertainty.

In contrast, certain embodiments of TiRex treat future inputs as missing values, allowing the internal memory to propagate both predictive state and uncertainty across patches. This results in more coherent probabilistic and overall better forecasts, as our quantitative and qualitative experiments show (see further below).

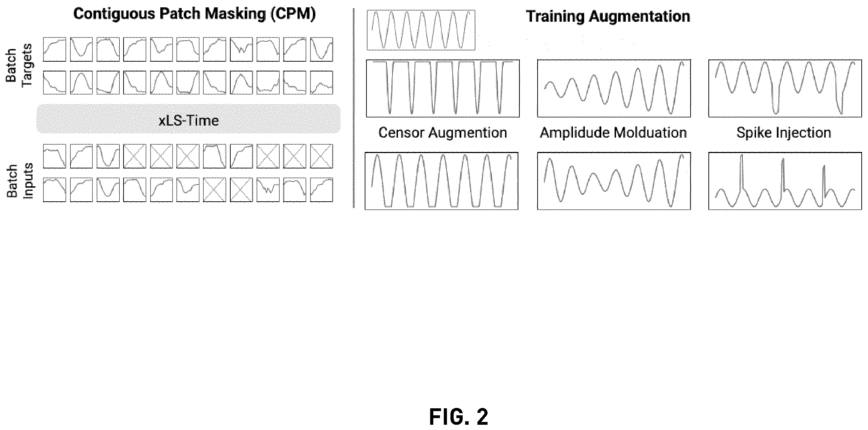

**Contiguous Patch Masking:** FIG. 2 illustrates Contiguous Patch Masking (CPM) and different training augmentations in accordance with one embodiment. CPM may be used to facilitate the stable multi-patch prediction capablity of TiRex.

In certain embodiments, CPM randomly masks full and consecutive patches in pretraining. Such a masked patch is represented as "missing values" in the model input, hence corresponds to the structure of the input when multi-patch forecasts are used in the inference.

In certain embodiments, the procedure is as follows: For each training sample first the amount of consecutive patches ${c}_{mask} ∼ U \left(1, {c}_{mask}^{max}\right)$ and the masking probability ${p}_{mask} ∼ U \left(0, {p}_{mask}^{max}\right)$ is sampled. Afterwards, for a time series of length T we sample a binary mask of length $\left⌊\frac{T}{{c}_{mask} {m}_{out}}\right⌋$ with Bernoulli probability *p*ₘₐₛₖ and repeat each element *p*ₘₐₛₖ · *m*ₒᵤₜ so that the mask has a length of T, too. Note that when neighboring elements are masked, the actual maximum of consecutive masked patches can be greater than ${c}_{mask}^{max}$. Further, note that while certain embodiments of CPM incorporate elements from BERT-style masked-modeling it, our training is still more similar to the typical causal-style masking of decoder-only approaches, as the target is shifted and the information flow is unidirectonal.

### Data Augmentation

To facilitate more diverse time series patterns and enhance the model's exposure to a wider range of potentially relevant dynamics, certain embodiments propose augmentations that can be apply during the training of TiRex. Examples of the employed augmentations, illustrated in FIG. 2, are:
1. Amplitude Modulation, which introduces trends and changepoints in the scale of the time series. Formally, a time series y is transformed by *y'ₜ = yₜ · aₜ,* where a follows a linear trend, potentially with changepoints.
2. Censor Augmentation, which censors values within the time series at a random threshold. The augmented respective series is computed by *y'ₜ* = max/min(y*ₜ*, *c*). The censor threshold c is sampled by drawing a quantile uniformly from the empirical distribution of the signal.
3. Spike Injection, which adds short, periodic spike signals to the time series. The augmented time series is computed by *y't = yₜ + sₜ,* where *sₜ* represents the added spike signals. The shape of each spike may be defined by a kernel, which can be a tophat, radial basis function (RBF), or linear kernel. The periodicity and the specific parameters of the kernel (e.g., width, height for tophat; center, variance for RBF) can be sampled from predefined distributions for each sample.

In certain embodiments, the augmentations are not applied to each training sample but utilized with a probability of 0.5 for amplitude modulation and censor augmentation and 0.05 for spike augmentation.

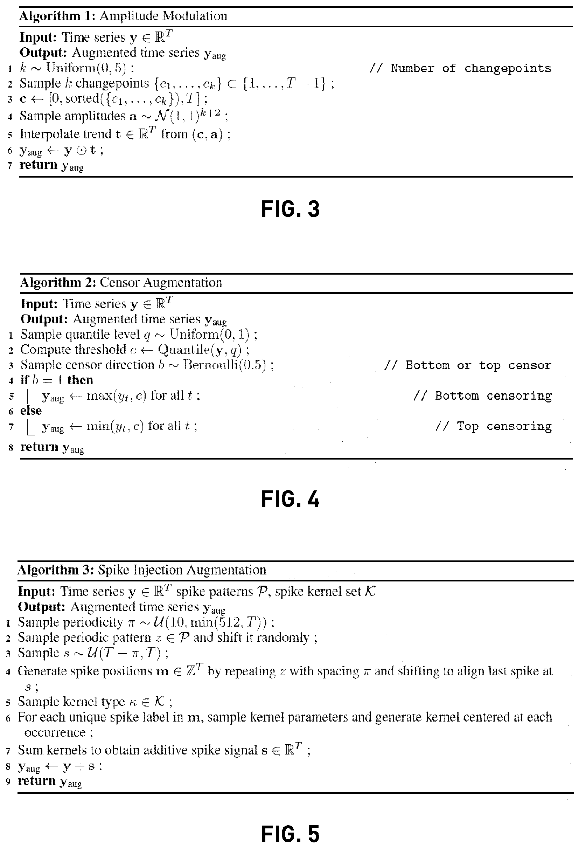

In the following, each of the above data augmentations will be explained in more detail:
**Amplitude Modulation:** In certain embodiments, this augmentation introduces scale trends and changepoints into the time series by multiplying the signal with a piecewise linear trend. The modulation trend can be generated by sampling changepoints and interpolating amplitudes between them. An example implementation is illustrated in FIG. 3.

**Censor Augmentation:** In certain embodiments, this augmentation censors (clips) the input signal either from below or above, depending on a randomly sampled direction. The clipping threshold can be determined by drawing a quantile uniformly from the empirical distribution of the signal. An example implementation is illustrated in FIG. 4.

**Spike Injection:** In certain embodiments, this augmentation injects structured additive noise in the form of sparse, periodic spikes. First a periodic pattern can be sampled, which is then tiled across the time axis with a sampled periodicity. Each spike label in the pattern can be mapped to a kernel (selected from a fixed set) with randomized parameters that control its shape and magnitude. The final augmentation is the sum of all such kernel evaluations added to the original signal. An example implementation is illustrated in FIG. 5.

The following table illustrates exemplary kernel types and their parameterizations (functions of periodicity *π*) which can be used for the Spike injection augmentations:

| **Kernel** | **Width Param** | **Amplitude Param** |
|---|---|---|
| Tophat | *w~*[0.05*π,* 0.2*π*] | *h* ~ [0.5, 3] |
| RBF | *σ*~[0.05*π,* 0.2*π*] | *h* ~ [0.5, 3] |
| Linear | *w*~[0.05*π,* 0.2*π*] | *h* ~ [0.5, 3] |

The following table illustrates spike pattern, representative patterns, and sampling probabilities which can be used for the Spike injection augmentations:

| **Category** | **Utilized Pattern** | **Sample Probability** |
|---|---|---|
| Simple | [0], [0,1] | 0.75 |
| 3-periodic | [0,1,2],[0,0,1] | 0.10 |
| 4-periodic | [0,0,1,1], [0,1,0,2] | 0.10 |
| Weekly-like | [0,0,0,0,0,1,1], [0,0,0,0,0,1,2] | 0.05 |

### Forecasting Method

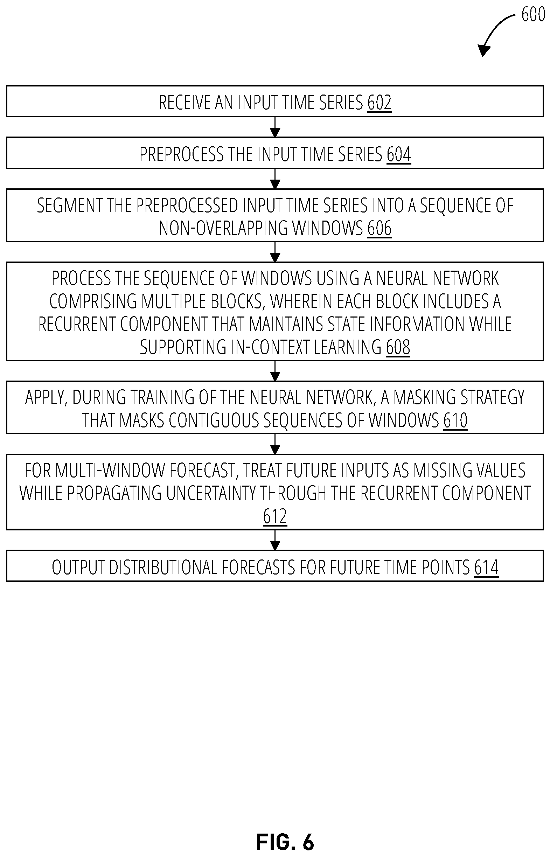

FIG. 6 illustrates a method for time series forecasting in accordance with one embodiment. In block 602, routine 600 receives an input time series. In block 604, routine 600 preprocesses the input time series. In block 606, routine 600 segments the preprocessed input time series into a sequence of non-overlapping windows. In block 608, routine 600 processes the sequence of windows using a neural network comprising multiple blocks, wherein each block includes a recurrent component that maintains state information while supporting in-context learning. In block 610, routine 600 applys, during training of the neural network, a masking strategy that masks contiguous sequences of windows. In block 612, for multi-window forecasts, routine 600 treata future inputs as missing values while propagating uncertainty through the recurrent component. In block 614, routine 600 outputs distributional forecasts for future time points.

### Training Method

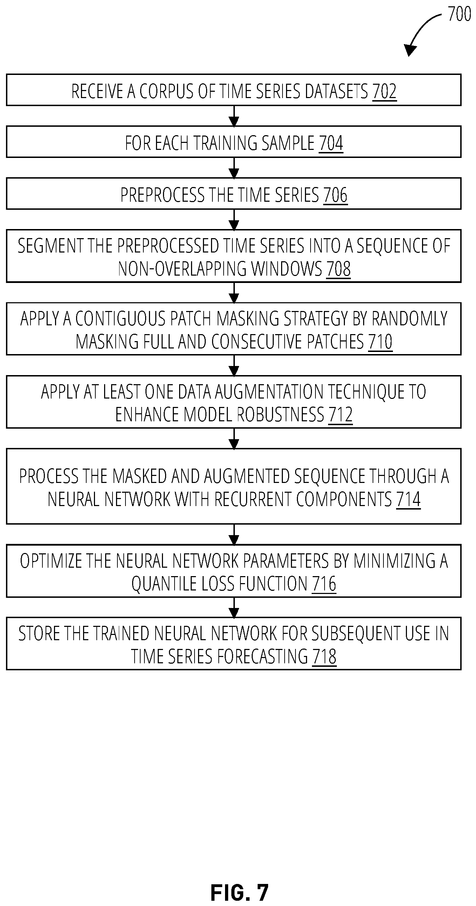

FIG. 7 illustrates a method for training a time series forecasting neural network in accordance with one embodiment. In block 702, routine 700 receives a corpus of time series datasets. In block 704, routine 700 performs the following steps 706 to 714 for each training sample. In block 706, routine 700 preprocesses the time series. In block 708, routine 700 segments the preprocessed time series into a sequence of non-overlapping windows. In block 710, routine 700 applys a Contiguous Patch Masking strategy by randomly masking full and consecutive patches. In block 712, routine 700 applies at least one data augmentation technique to enhance model robustness. In block 714, routine 700 processes the masked and augmented sequence through a neural network with recurrent components. In block 716, routine 700 optimizes the neural network parameters by minimizing a quantile loss function. In block 718, routine 700 stores the trained neural network for subsequent use in time series forecasting.

### Hardware Implementation

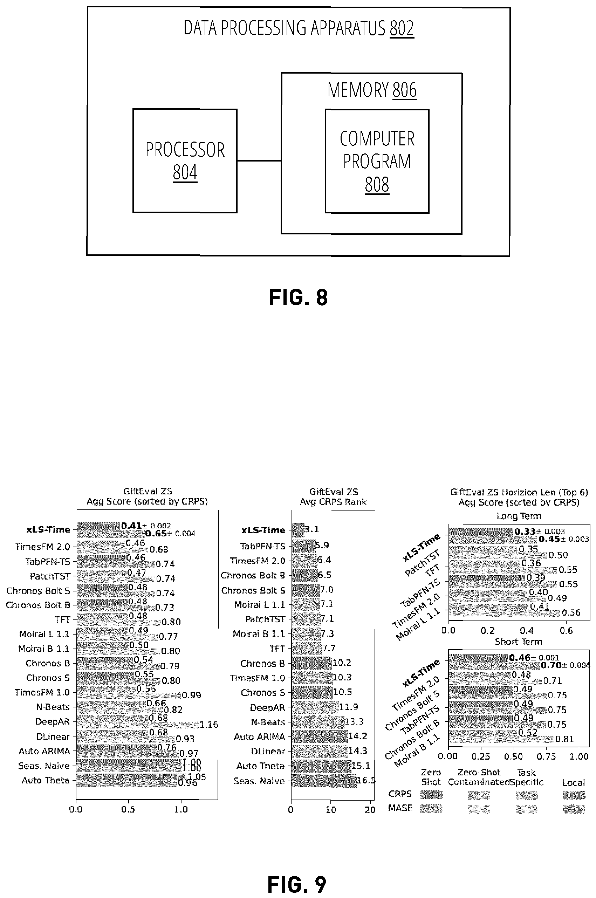

FIG. 8 illustrates a schematic block diagram of computer hardware on which embodiments of the present disclosure can be implemented. As can be seen, a data processing apparatus 802 comprises one or more processors 804 and a memory 806. The one or more processors 804 are communicatively coupled to the memory 806. The memory 806 stores a computer program 808. The computer program 808 may implement some or all aspects of the disclosed methods and functionalities.

### Specific Working Example and Experiments

This section outlines an experimental setup, including training procedures, evaluation benchmarks, and state-of-the-art comparisons. We further report the main results demonstrating the effectiveness of TiRex in general and the specific components in specific-the xLSTMbackbone, Contiguous Patch Masking, and the proposed augmentations.

**Model and Training Hyperparameters:** In one exemplary embodiment, TiRex utilizes a xLSTM-based architecture with hyperparameters summarized in the following table:

| **Parameter** | **Value** |
|---|---|
| Input patch size (*m*ᵢₙ) | 32 |
| Output patch size (*m*ₒᵤₜ) | 32 |
| Embedding dimension (*d*) | 512 |
| Feed-forward dimension (*d*_{ff}) | 2048 |
| Number of heads | 4 |
| Number of blocks | 12 |

The model is trained for 500,000 steps with a batch size of 256 using the AdamW optimizer with a learning rate of 0.001 and weight decay of 0.01. A cosine learning rate scheduler with linear warm-up is employed, where the warm-up ratio is set to 5 % and the minimum learning rate is 0.0001. TiRex was trained with a context length of 2048.

**TiRex Training:** In the discussed embodiment, the training data comprises three components:
1. Chronos Training Data (30 million time series): We incorporate the training datasets from Chronos and adopt their proposed time-series mixup augmentation strategy. Unlike Chronos, we generate significantly more and longer time series, expanding the diversity and temporal span of the data. The Chronos datasets are provided on: https://huggingface.co/datasets/autogluon/chronos_datasets.
2. Synthetic Gaussian Process Data (15 million time series): Inspired by KernelSynth, we generate synthetic time series using Gaussian Processes (GPs). In contrast to KernelSynth, we (i) extend the set of fixed periodicities by additionally sampling random periodicities, (ii) employ a more efficient GP implementation allowing for longer and more numerous sequences, and (iii) use a modified kernel bank consisting of Periodic, Rational Quadratic (RQ), Radial Basis Function (RBF), and Piecewise Polynomial kernels. For each generated series, a kernel (or a combination thereof) is sampled, and parameters (e.g., length-scale, periodicity) are drawn from predefined distributions to induce diversity in dynamics.
3. GiftEval Pretraining Data (≈ 2.5 million time series): We integrate a subset of the pretraining corpus from GiftEval. This data is proposed for pretraining and do not overlap with the GiftEval benchmark evaluation set. The respective datasets are provided on: https://huggingface.co/datasets/Salesforce/GiftEvalPretrain.

During training, we augment the samples with the proposed training augmentations and apply Contiguous Patch Masking as described above. We train TiRex with a context length of 2048 and a 199 window size of 32 for in- and output patches.

**Evaluation Benchmarks:** We evaluate TiRex on two standardized benchmarks with public leaderboards: (1) the Chronos Zero-Shot Benchmark (see huggingface.co/spaces/autogluon/fev-leaderboard), comprising 27 diverse datasets, each in one evaluation setting, primarily for short-term horizons, and (2) the GIFT-Eval benchmark (see huggingface.co/spaces/Salesforce/GIFT-Eval), which includes 24 datasets that are evaluated in different settings, and covers short-, medium-, and long-term horizons as well as different frequencies - in sum 97 evaluation settings. The training data of TiRex has no overlap with the Chronos-ZS benchmark, hence TiRex operates in zero-shot. We denote this benchmark as Chronos-ZS benchmark. To also ensure zero-shot conditions on the Gift-Eval benchmark, we exclude 16 of the 97 evaluation settings, which overlap with our training data, for the main evaluation and denote this benchmark as GiftEval-ZS benchmark. We note that all Chronos models do have the same overlap as TiRex; TimesFM, and Moirai have additional overlapping datasets and additionally also have overlaps with the Chronos-ZS benchmark.

Evaluation follows the respective benchmark protocols using mean absolute scaled error (MASE) for point forecast performance and the continuous ranked probability score (CRPS) for probabilistic forecast performance. Practically, the CRPS is approximated by the mean weighted quantile loss (WQL) over nine quantiles: 0.1 to 0.9 in increments of 0.13. Aggregated performance is computed by normalizing each evaluation setting's score by that of a seasonal naive baseline, followed by the geometric mean across evaluation settings. Additionally, the average rank across evaluation settings is reported to ensure robustness against outlier performance.

**Compared Models:** We compare TiRex against a broad set of state-of-the art models, including zero-shot pre-trained models and task-specific methods. Zero-shot models include Chronos and Chronos-Bolt, TimesFM (v1.0, v2.0), Moirai (all variants), Tiny Time Mixer (TTM), and TabPFN-TS. In addition, we provide a comparison against task-specific models trained individually on each dataset, such as PatchTST, TFT, DLinear, DeepAR, and N-BEATS. While not directly comparable as they are trained on the respective datasets, and thus do not operate in 'zero-shot', these models serve to contextualize the current strengths and limitations of zero-shot approaches.

### Zero-Shot Forecasting

**Gift-Eval Benchmark:** FIG. 9 presents the main results on the Gift-Eval-ZS benchmark. xLS232Time consistently outperforms all competing methods across both short- and long-term forecasting tasks. In terms of CRPS, TiRex achieves a score of 0.411 (standard deviation over training with 6 seeds is ±0.002), notably surpassing the next best zero-shot models (0.459, 0.463, 0.481). This performance gap is further reflected in the average rank, where TiRex shows a substantial lead over the second-best model, while the following models (TimesFM-2.0, TabPFN, and Chronos-Bolt-Base) achieve very similar scores among themselves. Importantly, while other models tend to peak either in short- (e.g., Chronos-Bolt-Base) or long-term (e.g., TabPFN-TS) forecasting, TiRex is the only model to excel simultaneously at both horizons. Moreover, TiRex attains these results with significantly fewer parameters (35M) compared to Chronos-Bolt-Base (200M) and TimesFM-2.0 (500M). The advantage is most pronounced in long-term forecasting, where TiRex becomes the first zero-shot model to surpass the performance of PatchTST and TFT.

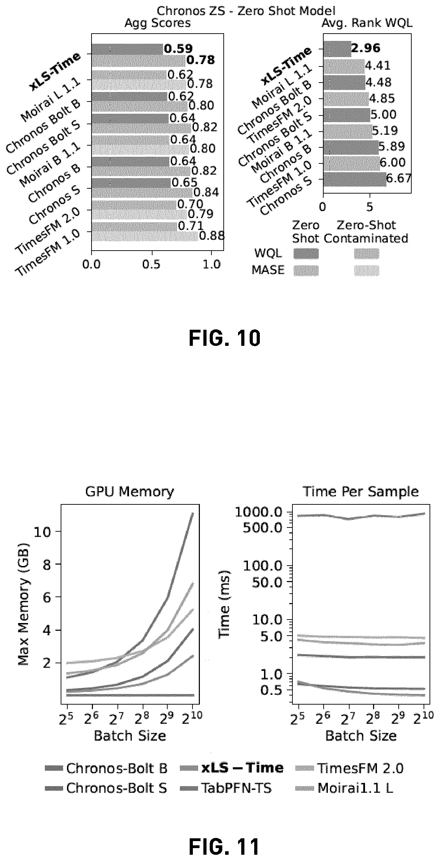

**Chronos-ZS Benchmark:** FIG. 10 shows the main results on the Chronos-ZS benchmark, which focuses on short-term forecasting. The performance patterns are similar to those observed on Gift-Eval-ZS: TiRex again achieves the best results, followed by Chronos-Bolt-Base. Notably, Moirai performs substantially better on the Chronos-ZS benchmark compared to the GiftEval-ZS benchmark; however, this improvement is likely due to the substantial overlap of 82% between its pretraining data and the Chronos-ZS test set. These results highlight the robustness of TiRex in zero-shot generalization.

FIG. 11 shows inference efficiency of the best performing pre-trained models. Left: GPU Memory depending on the batch size. Right: Inference Time per sample depending on the batch size.

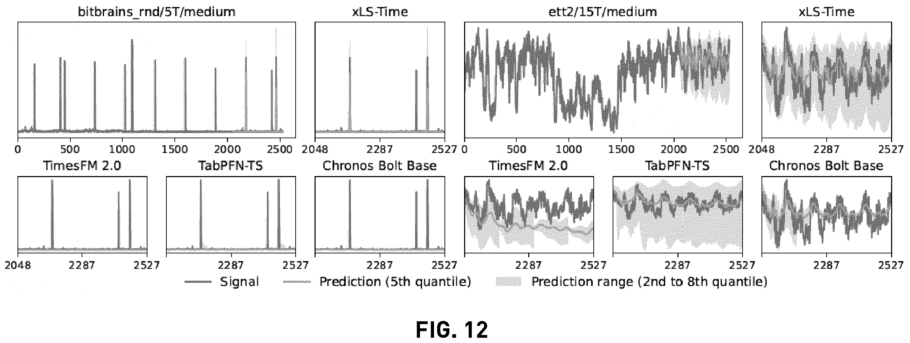

**Qualitative Analysis:** In addition to the quantitative evaluation, we qualitatively analyzed the predictions of TiRex and compared them against current state-of-the-art methods. Beyond its generally higher forecasting accuracy, we identify two key qualitative advantages of TiRex, illustrated in FIG. 12. First, TiRex demonstrates robust multi-patch prediction capabilities, maintaining coherent uncertainty estimates across different forecast horizons. Second, TiRex more accurately forecasts short periodic spikes, which are often missed or smoothed out by other models. We hypothesize that these improvements stem from three components: the proposed Contiguous Patch Masking enabling effective multi-patch forecasting, the sLSTM architecture providing state-tracking for uncertainty propagation and strong periodicity modeling, and the spike augmentation strategy enhancing the model's sensitivity to rare, sharp events during training.

**Inference Speed & Memory:** Apart from the forecasting performance, we analyse the GPU memory consumption and inference runtime across all models. Specifically, we evaluate samples with a context length of 2048 and a prediction length of 32 over multiple batch sizes. As expected, given TiRex substantially smaller size compared to the next best models (TimesFM-2.0 and Chronos-Bolt-Base), TiRex requires significantly less GPU memory and achieves faster inference speeds. Specifically, TiRex is over 11 times faster than TimesFM-2.0, over 4 times faster than Chronos-Bolt Base, and over 2176 times faster than TabPFN-TS. Furthermore, TiRex even outperforms Chronos-Bolt Small, a similarly sized transformer-based architecture for larger batch sizes. The differences in maximum GPU memory consumption follow a similar order.

### Ablations

We conduct ablation studies to analyse the impact of key components in TiRex. Specifically, this section focuses on Contiguous Patch Masking (CPM), the proposed data augmentations, and the xLSTM backbone architecture.

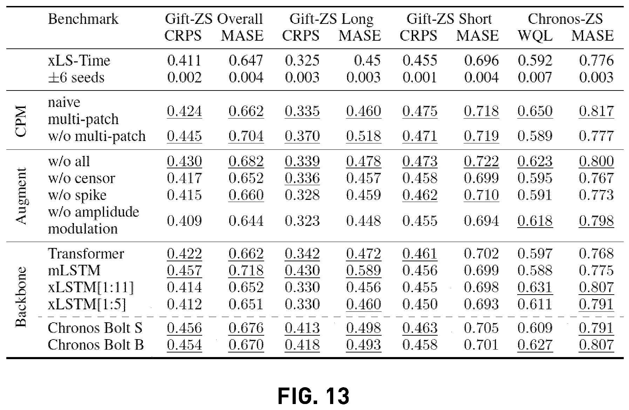

**Contiguous Patch Masking and Multi-Patch-Inference:** We analyse the effectiveness of the proposed Contiguous Patch Masking (CPM) procedure by comparing three configurations: (1) standard decoder-only training with autoregressive inference-this setting is similar e.g. to TimesFM; (2) training with naive multiple-patch procedure where we place the "rollout" always at the end of the sequence; and (3) training with CPM. Configurations (2) and (3) use the same inference procedure with masked tokens for multi-step forecasting, whereas (1) relies on patch-wise autoregressive decoding. As shown in the table in FIG. 13, only CPM enables strong long-term performance without degrading short-term performance. In contrast, naive multi-patch training diminishes the short-term forecasting performance, and standard next token training combined with autoregressive inference harms the long-term forecasting performance. These findings suggest that CPM is essential for training and inference behaviors under multi-patch prediction.

**Augmentation:** To assess the impact of our augmentations, we trained our model by excluding each augmentation individually, as well as with no augmentations at all. The results, detailed in the table in FIG. 13, indicate that including the augmentations is beneficial, i.e. improves the performance of the model. Performance consistently decreased when any single augmentation was removed at least on one benchmark metric, with the most substantial decline observed when no augmentations were applied. This underscores the effectiveness of each augmentation and their combined positive impact on the model's generalization capabilities.

**Backbone:** To assess the architectural choice of xLSTM with sLSTM modules, we replace it with mLSTM and Transformer blocks while keeping the patching and training procedure unchanged. In the Transformer variant, rotary positional embeddings are added to mitigate the absence of inherent positional information, due to their permutation-invariance property. We also analyze mLSTM and sLSTM mix architectures as proposed in the original xLSTM paper. We denote xLSTM[i:j] for an architecture where i sLSTM block is combined with j mLSTM blocks. Additionally, we ablate our overall architecture by comparing to a Chronos-Bolt architecture (Base and Small) that we train with our training procedure, using the same datasets and augmentations as for TiRex. The table in FIG. 13 summarizes the results. TiRex with only sLSTM blocks yields the best performance, especially on long-term forecasts. We hypothesize this is because its explicit state-tracking capabilities, which might facilitate uncertainty propagation and enable accurate modeling of periodic temporal structures over extended horizons. Using only mLSTM performs worst; however, already replacing one out of 12 blocks improves the results close to the slstm-only architecture of TiRex. The comparison to a Chronos Bolt architecture which is consistently outperformed by TiRex, highlights that our overall architecture is critical to achieve good performance on both long and short-term forecasting.

### Conclusion

Throughout this disclosure, a pre-trained time series forecasting model based on xLSTM has been described. To unlock the state-tracking capabilities of xLSTM, certain embodiments propose Contiguous Patch Masking, a training-time masking strategy tailored for in-context learning, which enables strong long-term forecasting results.

Embodiments establish a new state-of-the-art in zero-shot forecasting, outperforming prior methods on both short- and long-term horizons across the Chronos-ZS and GiftEval benchmarks. Ablation studies further highlight the individual contributions of each component to overall performance.

Certain embodiments provide a system and method for zero-shot time series forecasting are disclosed, comprising a neural network architecture based on an enhanced Long Short-Term Memory (xLSTM) design. The system supports long- and short-term probabilistic forecasting using in-context learning, without task-specific training. It introduces a Contiguous Patch Masking (CPM) mechanism during training and supports multi-patch inference. Additional time series augmentation techniques enable the model to generalize across diverse domains. The invention significantly improves forecasting accuracy, uncertainty estimation, and computational efficiency compared to state-of-the-art transformer-based models.

While various aspects and embodiments have been illustrated and described in detail in the foregoing description and the drawings, such illustration and description is illustrative or exemplary and not restrictive. Variations to the disclosed embodiments can be understood and effected by those skilled in the art in practicing the claimed subject-matter, from a study of the drawings, the disclosure, and the appended claims.

Although some aspects have been described in the context of a product, apparatus, device or system, these aspects also represent a description of the corresponding process, method or use, where a block or component corresponds to a method step or a feature of a method step. Analogously, aspects described in the context of a method step also represent a description of a corresponding block or component or feature of a corresponding product, apparatus, device or system.

The order of execution of the operations in the described embodiments is not essential, unless otherwise specified. That is, the operations may be performed in any order, unless otherwise specified, and embodiments may include additional or fewer operations than those mentioned.

In the claims, the word "comprising" does not exclude other elements or steps, and the indefinite article "a" or "an" does not exclude a plurality. A single entity may fulfill the functions of several entities recited in the claims. The mere fact that certain measures are recited in mutually different dependent claims does not indicate that a combination of these measures cannot be used to advantage. Any reference signs in the claims should not be construed as limiting the scope.

Embodiments of the present disclosure can be implemented in hardware, software, or both. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer-readable.

Embodiments of the present disclosure can be implemented on a computer system. The computer system may be a local computer device (e.g., personal computer, laptop, tablet computer or mobile phone) with one or more processors and one or more storage devices or may be a distributed computer system (e.g., a cloud computing system with one or more processors and one or more storage devices distributed at various locations, for example, at a local client and/or one or more remote server farms and/or data centers). The computer system may comprise any circuit or combination of circuits. In one embodiment, the computer system may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), or any other type of processor or processing circuit. Other types of circuits that may be included in the computer system may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system may also include a display device, one or more speakers, and a keyboard and/or controller, which can include a mouse, trackball, touch screen, voice-recognition device, or any other device that permits a system user to input information into and receive information from the computer system. Some or all of the method steps may be executed by (or using) a hardware apparatus, like for example, a processor, a microprocessor, a programmable computer or an electronic circuit. In some embodiments, some one or more of the described method steps may be executed by such an apparatus. A further embodiment is an apparatus as described herein comprising a processor and a storage medium.

Embodiments of the present disclosure can be implemented as a computer program (product) with a program code, the program code being operative for performing one of the methods when the computer program product runs on a computer. The program code may, for example, be stored on a machine-readable carrier. Other embodiments comprise a computer program for performing one of the methods described herein, stored on a machine-readable carrier. A further embodiment is a computer program having a program code for performing one of the methods described herein, when the computer program runs on a computer. A further embodiment is a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitory. A further embodiment is a computer having installed thereon the computer program for performing one of the methods described herein, or individual steps thereof.

A further embodiment is a data stream or a sequence of signals representing the computer program for performing one of the methods described herein. The data stream or the sequence of signals may, for example, be configured to be transferred via a data communication connection, for example, via the internet.

A further embodiment is an apparatus or a system configured to transfer (e.g., electronically or optically) a computer program for performing one of the methods described herein to a receiver. The receiver may, for example, comprise a computer, a mobile device, a memory device or the like. The apparatus or system may, for example, comprise a file server for transferring the computer program to the receiver.

### REFERENCE SIGNS

102 xLSTM
104 xLSTM block
106 input layer
108 output layer
110 sLSTM module
112 feed-forward network
114 RMSNorm
116 RMSNorm
118 residual block
600 routine
602 block
604 block
606 block
608 block
610 block
612 block
614 block
700 routine
702 block
704 block
706 block
708 block
710 block
712 block
714 block
716 block
718 block
802 data processing apparatus
804 processor
806 memory
808 computer program

## Claims

1. A method for time series forecasting, comprising:
receiving one or more input time series;
optionally segmenting the input time series;
processing the (optionally segmented) input time series using a neural network comprising one or more blocks, wherein each block includes a recurrent component that can maintain state information and that enables in-context and/or zero-shot learning;
for multi-timepoint forecasting, treating future inputs as missing values thereby making the neural network more robust and increasing the in-context learning and zero-shot learning capabilities; and
outputting point-wise and/or distributional forecasts for future time points.

2. The method according to claim 1, further comprising:
preprocessing the input time series;
wherein preprocessing the input time series comprises applying instance normalization to the input time series;
wherein the instance normalization comprises z-score normalization.

3. The method according to claim 1 or 2, wherein the recurrent component comprises an xLSTM;
wherein the xLSTM comprises a sLSTM module that enables state-tracking capabilities.

4. The method according to any one of claims 1 to 3, wherein each block further comprises:
at least one normalization layer;
a feed-forward network; and
at least one residual skip connection.

5. The method according to any one of claims 1 to 4, further comprising:
applying a masking strategy that masks contiguous sequences of windows;
wherein the masking strategy comprises Contiguous Patch Masking, wherein the Contiguous Patch Masking comprises:
randomly selecting a masking probability;
randomly selecting an amount of consecutive patches to mask; and
generating a binary mask according to the selected probability and consecutive patch amount.

6. The method according to any one of claims 1 to 5, wherein outputting distributional forecasts comprises predicting multiple quantile values for each future time point.

7. The method according to any one of claims 1 to 6, wherein treating future inputs as missing values comprises representing missing values with a binary mask that is concatenated to the time series values before processing.

8. The method according to any one of claims 1 to 7, further comprising mapping each window to an input space of the neural network using a two-layer residual block.

9. A neural network architecture for time series forecasting, comprising:
an input layer configured to receive, and optionally segment, one or more input time series;
one or more processing blocks, wherein each block comprises:
a recurrent component that can maintain state information and that enables in-context and/or zero-shot learning;
a feed-forward network component; and
at least one normalization layer;
connections between the multiple processing blocks configured to propagate both predictive state and uncertainty across multiple forecasting windows; and
an output layer configured to generate distributional forecasts for future time points.

10. The neural network architecture according to claim 9, wherein the recurrent component comprises an xLSTM;
wherein the xLSTM comprises a sLSTM module that enables state-tracking capabilities.

11. The neural network architecture according to claim 9 or 10, wherein each processing block further comprises residual skip connections around both the recurrent component and the feed-forward network component.

12. The neural network architecture according to any one of claims 9 to 11, wherein the output layer comprises a residual block that transforms output tokens back to dimensions of an output window.

13. A method for training a time series forecasting neural network, comprising:
receiving a corpus of time series datasets;
for each training sample:
preprocessing the time series;
optionally segmenting the preprocessed time series into a sequence of windows;
applying a Contiguous Patch Masking strategy by randomly masking full and consecutive patches;
applying at least one data augmentation technique to enhance model robustness;
processing the masked and augmented sequence through a neural network with recurrent components;
optimizing the neural network parameters by minimizing a quantile loss function; and
storing the trained neural network for subsequent use in time series forecasting.

14. A data processing apparatus, device or system comprising means for carrying out the method of any one of claims 1-8 or 13.

15. A computer program comprising instructions which, when the program is executed by a computer, cause the computer to carry out the method of any one of claims 1-8 or 13.
